# FASCICULE DE BREVET EUROPEEN

(11) **EP 1 814 411 B1**
(45) Date de publication et mention de la délivrance du brevet: **09.09.2009**
(21) Numéro de dépôt: 05818065.4
(22) Date de dépôt: 17.11.2005
(51) Int. Cl.: A23L 1/30, A23D 9/00, A23D 9/02, A23L 1/24

(54) **COMPOSITION LIPIDIQUE PRESENTANT DES PROPRIETES NUTRITIONNELLES ET ORGANOLEPTIQUES D'INTERET**
INTERESSANTE NÄHRSTOFF- UND ORGANOLEPTISCHE EIGENSCHAFTEN ZEIGENDE LIPIDISCHE ZUSAMMENSETZUNG
LIPIDIC COMPOSITION EXHIBITING INTERESTING NUTRITIONAL AND ORGANOLEPTIC PROPERTIES

(30) Priorité: 26.11.2004 FR 0412551
(43) Date de publication de la demande: 08.08.2007
(73) Titulaire: Lesieur S.A.S., 92665 Asnières-sur-Seine cedex (FR)
(72) Inventeur: VIGNERON, Pierre-Yves, F-59140 DUNKERQUE (FR); FRIBOURG, Jean-Louis, F-75016 PARIS (FR)
(74) Mandataire: Grosset-Fournier, Chantal Catherine
(86) Numéro de dépôt international: PCT/FR2005/002854
(87) Numéro de publication internationale: WO 2006/056679

(56) Documents cités:
- EP-A- 0 326 198
- EP-A- 0 494 707
- EP-A- 0 639 333
- EP-A- 0 815 735
- FR-A- 2 841 097
- FR-A- 2 845 569

## Description

La présente invention a pour objet une composition lipidique présentant des propriétés nutritionnelles et organoleptiques d'intérêt.

L'invention concerne également les compositions alimentaires contenant ladite composition lipidique.

On connaît aujourd'hui l'utilité des mélanges d'huiles susceptibles d'apporter les acides gras essentiels, l'acide alpha-linolénique (précurseur de la famille ω3) et l'acide linoléique (précurseur de la famille ω6), les mélanges d'huiles permettant d'optimiser de telles compositions en fonction du développement des connaissances en matière de nutrition des lipides.

Les recommandations de santé préconisent de réduire la proportion d'acides gras saturés dans la diète quotidienne tout en proposant un apport équilibré des deux acides gras essentiels, en quantité suffisante, à la fois en valeur absolue et dans le respect d'un rapport prédéterminé des deux acides gras ω6 et ω3, en présence d'une quantité substantielle d'acides gras monoinsaturés (acide oléique ω9).

Ainsi l'huile ISIO4 mise au point et commercialisée par la demanderesse contient-elle 10% d'acides gras saturés, 45% d'acides gras monoinsaturés, principalement de l'acide oléique (ω9), et 45% d'acides gras polyinsaturés dont 43,1% d'acide linoléique (ω6) mais seulement 1,9% d'acide alpha-linolénique (ω3). La quantité d'acide alpha-linolénique dans les huiles végétales est en effet actuellement limitée à 2% par la réglementation française pour des usages en friture. De ce fait, le rapport ω6/ω3 de cette huile ISIO4 s'élève à 23, alors que les recommandations actuelles des nutritionnistes prônent de se rapprocher de 5 pour l'ensemble de l'alimentation quotidienne.

L'objectif de réduction du rapport ω6/ω3 dans les mélanges d'huiles équilibrées passe donc par l'introduction de davantage d'huiles végétales riches en acide alpha-linolénique (ω3). Cependant, en raison de la polyinsaturation des acides gras essentiels, notamment l'acide alpha-linolénique (ω3), les huiles raffinées contenant des quantités significatives de cet acide, comme notamment les huiles de colza (également appelées huiles de canola), de soja, de noix, de cameline, de lin, de périlla, et les mélanges de ces huiles entre elles ou avec d'autres huiles de graines peuvent perdre rapidement leur neutralité de goût au cours de leur conservation sous l'action conjuguée de l'air, de la lumière naturelle et de la température.

Le consommateur détecte alors au fur et à mesure de leur utilisation des goûts d'altération souvent désagréables, souvent décrits comme ressemblants à un goût de poisson, même si ces huiles ont été initialement raffinées dans de bonnes conditions.

Ces défauts d'altération organoleptique sont détectés plus rapidement et plus finement par l'analyse sensorielle que par les méthodes classiques d'analyse physicochimique du rancissement oxydatif. Leur apparition dépend de la température, de l'intensité de la lumière et du temps de contact avec l'air, facteurs connus pour favoriser la formation des peroxydes, d'autant plus facilement que les acides gras sont insaturés. Selon des mécanismes classiquement décrits, ces peroxydes se décomposent ensuite en composés plus courts pouvant être à l'origine de goûts désagréables, même à de très faibles concentrations de l'ordre du µg par kg.

Pour augmenter la stabilité des huiles végétales, on a eu recours dans le passé à des méthodes d'hydrogénation des acides gras polyinsaturés conduisant à la formation de liaisons trans indésirables car impliquées dans certains types de pathologies notamment cardiovasculaires, méthodes qui font perdre par ailleurs à l'huile ainsi traitée la valeur nutritionnelle intrinsèque de l'acide alpha-linolénique vrai (forme cis).

Les antioxydants chimiques sont aussi classiquement utilisés pour retarder l'apparition des peroxydes, pratique qui est loin de garantir une protection certaine au plan organoleptique sur des durées de conservation prolongées et qui n'est pas toujours souhaitable au plan de la santé.

Plusieurs huiles alimentaires riches en acide alpha-linolénique, pures ou en mélanges, sont déjà commercialisées mais ne présentent pas simultanément les qualités nutritionnelles attendues, une stabilité satisfaisante et des qualités organoleptiques appropriées, au cours du temps.

On peut citer par exemple le mélange d'huiles commercialisé sous la marque Primevère, comme huile composée diététique, auquel la présence d'huiles de colza, de noix et de poisson confère un caractère fragile nécessitant de la garder avant et après ouverture au réfrigérateur (c'est-à-dire à basse température et à l'abri de la lumière), et dont la DLUO est limitée à environ 6 mois. Un tel mélange ne peut donc être conservé sur une longue durée à température ambiante et à la lumière naturelle.

On peut également citer les mélanges de triglycérides d'acides gras qui font l'objet du brevet EP n°639 333 et qui dans leur généralité contiennent des acides gras à chaînes longues, de degré d'insaturation supérieur à 3 et dont les modes de réalisation préférés contiennent de l'huile de poisson et de l'huile de pépins de cassis. Ces mélanges nécessitent des conditions de préparation particulières, par exemple sous atmosphère d'azote et en présence d'antioxydants pour éviter les dégradations oxydatives dues à la présence de fortes polyinsaturations.

D'autres mélanges d'huiles sont décrits par exemple dans EP 0 494 707 et FR 2 844 097.

Par ailleurs, en raison de la présence d'huile d'organismes marins, ces mélanges contiennent les acides gras polyinsaturés oméga 3 à longue chaîne EPA (acide eicosapentaénoïque) et DHA (acide docosahexaénoïque) qui s'adressent davantage aux individu présentant un statut enzymatique déficitaire en désaturases les empêchant de correctement transformer l'acide alpha-linolénique (ω3) en acides gras polyinsaturés supérieurs EPA et DHA mentionnés ci-dessus.

L'un des aspects de l'invention est de fournir une composition lipidique garantissant d'une part un apport important en acide alpha-linolénique (ω3) supérieur aux 1,9% d'ISIO4 avec de bons équilibres nutritionnels entre les différentes familles d'acides gras dont en particulier entre les précurseurs des familles ω3 et ω6 et entre les acides oléique (ω9) et linoléique (ω6) et d'autre part ne perdant pas sa qualité organoleptique au cours du temps en dépit de l'action conjuguée de la température, de la lumière naturelle et éventuellement de l'air, ceci sans adjonction d'agents antioxydants.

Par acide alpha-linolénique (ω3), on entend l'acide alpha-linolénique total, comprenant majoritairement la forme isomérique "all cis" ("tout cis") et à faible teneur les formes isomériques "trans" provenant de l'opération de désodorisation sous vide à une température voisine de 200-220°C. En pratique les désodorisations effectuées selon les bonnes pratiques de fabrication conduisent à des taux d'au moins 93% de la forme "all cis" nutritionnellement recherchée.

De même, par acide linoléique (ω6), on entend l'acide linoléique total, comprenant très majoritairement la forme isomérique "all cis" ("tout cis") et à très faible teneur la forme isomérique "trans". Les bonnes pratiques de fabrication en désodorisation conduisent à des taux d'au moins 99% de la forme "all cis" nutritionnellement recherchée.

L'apport en acide alpha-linolénique (ω3) que garantit la composition revendiquée se situe entre environ 4,5 et environ 6,5 g d'acide alpha-linolénique par 100g d'huile, contribuant ainsi à couvrir une partie non négligeable des besoins quotidiens tels que définis dans les Apports Nutritionnels Conseillés pour la population française (ANC 2001) soit 2g par jour chez l'homme adulte. Une cuillère à soupe de 10g de l'huile de la composition objet de l'invention apportera ainsi avantageusement entre environ 22% et 33% des ANC quotidiens.

L'un des autres aspects de l'invention est de fournir une composition lipidique susceptible d'être conservée longtemps à la température ambiante et à la lumière, une longue durée de vie permettant une gestion logistique aisée tout au long de la chaîne de distribution, du produit jusqu'au consommateur final.

L'un des autres aspects de l'invention est de fournir une composition lipidique stable et goûteuse, susceptible d'être consommée régulièrement par des individus sains.

Les différents aspects sont obtenus par la composition lipidique de l'invention, laquelle contient plus de 99%, et de préférence environ 99,9%, de lipides d'origine végétale, comprenant :
- environ 45 à environ 67%, de préférence environ 47 à environ 63% en poids d'huile de colza,
- au moins 18%, et notamment d'environ 18 à environ 28%, et de préférence d'environ 20 à environ 27% en poids d'huile d'olive, qui protège contre l'altération organoleptique de l'huilé de colza au cours du temps, et
- environ 11 à environ 24%, et de préférence d'environ 16 à environ 21% en poids d'au moins une huile végétale contenant d'une part d'environ 50 à environ 80% en poids d'acide linoléique et d'autre part d'environ 20 à environ 200 mg/100 g d'α-tocophérol, de telle sorte que la composition lipidique comprend d'environ 20 à environ 35 mg/100 g, et de préférence d'environ 21 à environ 29 mg/100 g en poids d'α-tocophérol,
   ladite composition lipidique présentant les propriétés suivantes :
   * elle se conserve à température ambiante à la lumière pendant au moins 12 mois sans altération organoleptique,
   * sa date limite d'utilisation optimale (DLUO) est d'au moins 15 mois à température ambiante, notamment à l'abri de la lumière,
   * elle présente un rapport en poids acide oléique/acide linoléique (ω9/ω6) variant de 1,9 à 2,8,
   * elle présente un rapport en poids acide linoléique/acide alpha-linolénique (ω6/ω3) variant de 3 à 6, et de préférence de 3,8 à 5,5,
   * elle ne comprend pas d'acides gras polyinsaturés présentant un degré d'insaturation supérieur à 3,
   * elle est dépourvue d'huile réputée à potentiel allergénique, et
   * elle est dépourvue d'huile provenant d'organismes marins.

La présente invention concerne une composition lipidique de l'invention, laquelle contient plus de 99%, et de préférence environ 99,9%, de lipides d'origine végétale, comprenant :
- environ 45 à environ 67%, de préférence environ 47 à environ 63% en poids d'huile de colza,
- au moins 18%, et notamment d'environ 18 à environ 28%, et de préférence d'environ 20 à environ 27% en poids d'huile d'olive, qui protège contre l'altération organoleptique de l'huile de colza au cours du temps, et
- environ 11 à environ 24%, et de préférence d'environ 16 à environ 21% en poids d'au moins une huile végétale contenant d'une part d'environ 50 à environ 80% en poids d'acide linoléique et d'autre part d'environ 20 à environ 200 mg/100 g d'α-tocophérol, de telle sorte que la composition lipidique comprend d'environ 20 à environ 35 mg/100 g, et de préférence d'environ 21 à environ 29 mg/100 g en poids d'α-tocophérol,
   ladite composition lipidique présentant les propriétés suivantes :
   * elle se conserve à température ambiante à la lumière naturelle en intérieur pendant 12 semaines de tests accélérés sans altération organoleptique,
   * sa date limite d'utilisation optimale (DLUO) est d'au moins 15 mois, et notamment de 22 mois à température ambiante, notamment à l'abri de la lumière,
   * elle présente un rapport en poids acide oléique/acide linoléique (OL/LA) (ω9/ω6) variant de 1,9 à 2,8,
   * elle présente un rapport en poids acide linoléique/acide alpha-linolénique (LA/ALA)(ω6/ω3) variant de 3 à 6, et de préférence de 3,8 à 5,5,
   * elle ne comprend pas d'acides gras polyinsaturés ω6 présentant un degré d'insaturation de 3,
   * elle ne comprend pas d'acides gras polyinsaturés ω3 et ω6 présentant un degré d'insaturation supérieur à 3,
   * sa viscosité absolue mesurée à 20°C est inférieure à 90 centipoises (0,09 N.s.m⁻²), et de préférence inférieure à 80 centipoises (0,08 N.s.m⁻²),
   * elle est dépourvue d'huile réputée à potentiel allergénique, et
   * elle est dépourvue d'huile provenant d'organismes marins.

La composition lipidique selon l'invention est sous forme liquide.

Elle est constituée d'huile de colza, d'huile d'olive et d'une troisième huile qui peut être sous la forme d'un mélange de plusieurs huiles végétales. Ainsi, les 11 à 24% en poids d'au moins une huile végétale contenant d'une part d'environ 50 à environ 80% en poids d'acide linoléique et d'autre part d'environ 20 à environ 200 mg/100 g d'α-tocophérol peuvent être sous la forme d'un mélange de plusieurs huiles végétales.

L'expression "huile d'olive qui protège contre la modification organique de l'huile de colza au cours du temps" désigne une huile d'olive qui confère à la composition le goût d'huile d'olive,
- lorsque la composition est conservée au moins 22 mois à température ambiante dans un emballage, par exemple dans des cartons,
- lorsque la composition est soumise à un test de vieillissement accéléré par conservation à la température ambiante et à la lumière naturelle en intérieur, diffuse et modérément intense, sur une durée d'au moins 6 semaines et jusqu'à 12 semaines (test accéléré décrit ci-après dans les exemples), ou
- lorsque la composition est soumise à un test d'usage ménager comprenant d'abord une pré-conservation à température ambiante et à la lumière naturelle en intérieur, diffuse et modérément intense, d'une durée de 3 à 6 mois puis un ensemble d'expositions périodiques à l'air pendant 12 semaines (test d'usage ménager décrit dans les exemples),
sans que ne soient perçus les défauts habituels d'altération de goût de l'huile de colza, souvent décrits comme ressemblants à des goûts de poisson.

Pour fixer les idées, une lumière modérément intense correspond à une luminosité ne dépassant pas 5 000 lux et notamment d'au moins 300 lux. Une lumière atténuée correspond à une luminosité ne dépassant pas environ 20 lux.

Cette protection de l'huile d'olive contre l'altération du goût de l'huile de colza peut correspondre à un masquage de ladite altération.

Cette expression désigne également une huile d'olive qui confère à la composition de l'invention tout ou partie des attributs définissant la qualité organoleptique d'une huile d'olive, notamment vierge ou vierge extra, à savoir le fruité, le piquant et l'amer, lorsque la composition est soumise aux mêmes tests de conservation que ci-dessus.

Comme il ressort par .ailleurs des exemples ci-après, on constate qu'il y a relativement peu de différences entre une huile témoin correspondant à la composition lipidique de l'invention mais conservée à l'obscurité en chambre froide et l'huile de la composition lipidique de l'invention soumise à un test de vieillissement accéléré ou encore à un test d'usage ménager plus sévère, ce qui démontre la bonne résistance au vieillissement de la composition revendiquée à température ambiante sur une longue durée de vie.

On constate également qu'une huile de colza raffinée (100% pure) ayant subi le même test de vieillissement accéléré ou soumise au test d'usage ménager peut être jugée inacceptable dans certains cas, contrairement à la composition lipidique de l'invention.

La composition lipidique selon l'invention peut être conservée sans précaution particulière et ne nécessite pas d'être stockée au froid et à l'abri de la lumière.

Elle peut également être préparée, dans le respect des bonnes pratiques de fabrication, sans précaution particulière, notamment sans utilisation d'une atmosphère inerte, et sans ajout d'agents antioxydants en sus des divers principes antioxydants naturellement présents dans les huiles de la composition de l'invention (notamment les tocophérols des huiles de graines et notamment les polyphénols de l'huile d'olive).

Le rapport en poids acide oléique / acide linoléique (ω9/ω6)(QL/LA) varie de 1,9 à 2,8 ce qui garantit un équilibre avec environ deux à trois fois plus d'acide gras monoinsaturé oléique (ω9) que d'acide gras di-insaturé linoléique (ω6), permettant de mieux contrôler le potentiel de stress oxydant lié à l'huile consommée tout en limitant la quantité d'acide linoléique (ω6) apporté dans la diète quotidienne, les recommandations des nutritionnistes étant de limiter l'apport de cet acide gras à 10 g par jour chez l'homme adulte (Apports Nutritionnels Conseillés pour la population française, 2001).

Le rapport en poids acide linoléique / acide alpha-linolénique (LA/ALA)(ω6/ω3) varie de 3 à 6 et de préférence de 3,8 à 5,5 dans une plage correspondant sensiblement aux recommandations actuelles des nutritionnistes, à savoir d'environ 5 pour l'ensemble de la diète quotidienne, la composition objet de l'invention jouant sur ce plan un rôle d'huile équilibrée et apportant entre environ 4,5 et environ 6,5 g d'acide alpha-linolénique par 100 g d'huile.

La composition ne comprend pas d'acides gras polyinsaturés ω6 ayant un degré d'insaturation de 3 (acide gamma-linolénique ou GLA).

La composition ne comprend pas d'acides gras polyinsaturés ω3 et ω6 présentant un degré d'insaturation supérieur à 3, ce qui la rend administrable à des individus sains ne faisant pas partie de groupes à besoins particuliers pouvant nécessiter une supplémentation en dérivés supérieurs avec des insaturations de plus de 3.

Elle est dépourvue d'huile réputée à potentiel allergénique, à savoir les huiles vierges ou semi-raffinées d'arachide, de noix, de sésame, de noisette et également certaines de ces huiles existant sous forme raffinée, afin de ne pas exposer inutilement les individus particulièrement sensibles à l'un ou plusieurs des allergènes ci-dessus, même lorsque ces allergènes ne sont présents qu'à l'état de traces infimes dans les huiles raffinées.

Elle est dépourvue d'huile provenant d'organismes marins, par exemple les huiles extraites à partir de différentes espèces de poissons, notamment les poisson gras, car il est connu que, d'une part, la mise en oeuvre de telles huiles peut être cause d'altérations organoleptiques notables à température ambiante et à la lumière naturelle sur une durée de conservation prolongée, et que, d'autre part, la présence d'acides gras ω3 à plus de 3 insaturations tels que l'EPA, le DPA et le DHA n'est pas recherchée dans la présente composition destinée à des individus sains.

Selon un mode de réalisation avantageux, la composition lipidique de l'invention est caractérisée en ce que les acides gras ω3 de ladite composition lipidique présentent un degré d'insaturation maximal de 3 et en ce que les acides gras ω6 de ladite composition lipidique présentent un degré d'insaturation maximal de 2.

Selon un autre mode de réalisation avantageux, la composition lipidique de l'invention est caractérisée en ce qu'elle est dépourvue d'acides gras polyinsaturés à chaînes longues, à savoir des acides gras ayant un degré d'insaturation strictement supérieur à 3, et notamment en ce qu'elle est dépourvue, dans la famille ω3, d'acide eicosapentaénoïque (EPA)(C20:5 n-3), d'acide docosapentaénoïque (DPA)(C22:5 n-3) et d'acide docosahexaénoïque (DHA)(C22:6 n-3). Cette composition peut donc être administrée à des individus sains sans besoins particuliers et ne présentant pas un statut enzymatique déficitaire en désaturases empêchant de correctement transformer l'acide ω3 alpha-linolénique en EPA et DHA.

Il est en effet admis par les nutritionnistes que l'organisme sain est très capable d'assimiler le précurseur alpha-linolénique (ω3) et de le transformer pour partie en EPA, permettant ainsi à l'organisme de contrer l'action proaggrégante et proinflammatoire de l'acide arachidonique (ω6), équivalent de l'EPA dans la famille ω6.

L'exemple 28 décrit ci-après montre précisément que l'administration de la composition lipidique de l'invention à des hommes adultes sains pendant 4 mois à raison de 30 g par jour provoque un enrichissement significatif en acide alpha-linolénique et en EPA des phospholipides et des esters de cholestérol plasmatiques.

Pour le DHA, bien que les taux de conversion de l'EPA en DHA soient réputés très faibles (quelques %), on considère qu'en raison du pouvoir biologiquement élevé de cet acide gras polyinsaturé à 6 doubles liaisons et possiblement réactif au plan du stress oxydatif, il est plus prudent d'éviter une incorporation de cet acide gras dans des huiles de consommation courante et les nutritionnistes conseillent plutôt de consommer plusieurs fois par semaine de la chair de poisson gras qui apportera cet acides gras supérieur.

Selon un mode de réalisation avantageux, la composition lipidique comprend :
- environ 9 à environ 11%, et de préférence environ 10% en poids d'acides gras saturés,
- environ 54 à environ 65%, de préférence d'environ 55 à environ 60%, et encore de préférence d'environ 57 à environ 60% en poids d'acides gras monoinsaturés, et
- environ 25 à environ 35%, et de préférence environ 29 à environ 33% en poids d'acides gras polyinsaturés.

Selon un autre mode de réalisation avantageux, la composition lipidique comprend environ 53 à environ 61%, et de préférence d'environ 55 à environ 59% en poids d'acide monoinsaturé oléique (ω9).

Les huiles de colza et les huiles d'olive sont la source principale d'acide oléique de la composition revendiquée.

Selon un autre mode de réalisation avantageux, la composition lipidique de l'invention comprend environ 21 à environ 29%, et de préférence d'environ 23 à environ 28% en poids d'acide polyinsaturé linoléique (ω6).

Les huiles de tournesol, de pépins de raisin, de carthame, de germes de maïs, de coton, sont les principales sources d'acide linoléique de la composition de l'invention. Elles peuvent être avantageusement complétées par des huiles de germes de blé ou d'huiles de pépins de pommes, ou encore par toute huile végétale contenant plus de 50% d'acide linoléique.

Selon un autre mode de réalisation avantageux, la composition lipidique de l'invention comprend environ 4,5 à environ 6,5%, et de préférence environ 5,0 à environ 5,5 % en poids d'acide polyinsaturé alpha-linolénique (ω3).

L'huile de colza constitue la principale source d'acide alpha-linolénique de la composition de l'invention. Elle peut être avantageusement partiellement remplacée par de l'huile de soja ou encore de l'huile de lin alimentaire ou de l'huile de cameline ou de l'huile de périlla. Ces dernières permettent en particulier d'ajuster la teneur en acide alpha-linolénique lorsque l'huile de colza n'en contient pas suffisamment pour des raisons variétales et/ou climatiques.

Selon un autre mode de réalisation avantageux dans la composition lipidique de l'invention, le rapport en poids entre les acides gras monoinsaturés et les acides gras polyinsaturés varie d'environ 1,5 à environ 2,7, et de préférence d'environ 1,6 à environ 2,3.

Selon un autre mode de réalisation avantageux, la composition lipidique de l'invention présente un rapport en poids entre les acides gras ω6 et entre les acides gras ω3 d'environ 5.

Selon un autre mode de réalisation avantageux, la composition lipidique de l'invention comprend environ 20 mg/100 g à environ 35 mg/100 g en poids d'α-tocophérol, et de préférence comprend environ 21 mg/100 g à environ 29 mg/100 g en poids d'α-tocophérol.

Selon un autre mode de réalisation avantageux, la composition lipidique de l'invention est caractérisée en ce que le rapport en poids entre l'α-tocophérol et le γ-tocophérol varie d'environ 1,0 à environ 2,0 et de préférence d'environ 1,1 à environ 1,8.

Contrairement aux autres huiles végétales courantes prises isolément à l'état pur, la composition de l'invention présente l'originalité de contenir simultanément des quantités d'α-tocophérol et de γ-tocophérol du même ordre de grandeur. La composition bénéficie de ce fait à la fois du pouvoir antioxydant "biologique" de l'α-tocophérol (activité vitaminique E sensu stricto) et du pouvoir antioxydant "technologique" reconnu au γ-tocophérol.

En comptant les polyphénols naturels apportés par l'huile d'olive vierge ou vierge extra de la composition, on peut penser, sans être liés par la théorie, que l'ensemble de ces différents antioxydants naturels participe à la protection de la composition pendant sa durée de vie à la température ambiante.

De façon avantageuse, la composition lipidique de l'invention est caractérisée en ce que l'α-tocophérol est de l'α-tocophérol naturel.

Dans un autre mode de réalisation avantageux, la composition lipidique de l'invention est caractérisée en ce qu'elle peut être supplémentée en α-tocophérol et/ou acétate d'α-tocophérol afin d'obtenir une teneur finale en α-tocophérol d'au maximum environ 100 mg/100 g de composition lipidique.

A cette teneur maximum, on obtient en effet un apport de 10 mg d'α-tocophérol par cuillère à soupe de 10 g de composition lipidique, soit la totalité de l'apport journalier recommandé (AJR) en vitamine E.

Lorsque cette supplémentation est effectuée avec de l'α-tocophérol, l'ajout est utilement compris entre environ 65 et environ 80 mg d'α-tocophérol pour atteindre le maximum de 100 mg/100 g de composition lipidique.

Lorsque cette supplémentation est effectuée avec de l'acétate d'α-tocophérol, l'ajout est utilement compris entre environ 97 et environ 120 mg d'acétate d'α-tocophérol pour atteindre le maximum de 100 mg/100 g de composition lipidique.

Selon un autre mode de réalisation avantageux, la composition lipidique de l'invention est exempte d'huile réputée à potentiel allergénique comme l'huile d'arachide, l'huile de noix, l'huile de noisette ou l'huile de sésame.

Selon un autre mode de réalisation avantageux, la composition lipidique de l'invention est exempte d'huile d'organismes marins, notamment de poissons.

Selon un mode de réalisation avantageux, la composition lipidique est caractérisée en ce que l'huile d'olive, qui protège contre la modification organoleptique de l'huile de colza au cours du temps est de l'huile d'olive "vierge extra" ou de l'huile d'olive "vierge" ou de l'huile d'olive "composée d'huiles d'olive raffinées et d'huiles d'olive vierges".

On définit par huile d'olive "vierge extra" une huile d'olive non raffinée, telle qu'obtenue par pressage et malaxage du fruit de l'olivier, séparation et filtration de l'huile, dont l'acidité oléique est inférieure ou égale à 0,8% et qui respecte les autres critères caractéristiques de pureté et de qualité tels que définis dans l'annexe I du règlement européen n° 1989/2003 du 6 novembre 2003, dont les propriétés organoleptiques (médiane du défaut égale à 0 et médiane du fruité supérieure à 0) notées dans ladite annexe pour la catégorie "huile d'olive vierge extra".

On définit de même par huile d'olive "vierge" une huile d'olive non raffinée, telle qu'obtenue par pressage et malaxage du fruit de l'olivier, séparation et filtration de l'huile, dont l'acidité oléique est inférieure ou égale à 2% et qui respecte les autres critères caractéristiques de pureté et de qualité tels que définis dans l'annexe I du règlement européen n° 1989/2003 du 6 novembre 2003, dont les propriétés organoleptiques (médiane du défaut inférieure ou égale à 2,5 et médiane du fruité supérieure à 0) notées dans ladite annexe pour la catégorie "huile d'olive vierge".

On définit enfin par huile d'olive "composée d'huiles d'olive raffinées et d'huiles d'olive vierges" une huile d'olive résultant du mélange correspondant et dont l'acidité oléique est inférieure ou égale à 1% et qui respecte les autres critères caractéristiques de pureté et de qualité tels que définis dans l'annexe I du règlement européen n° 1989/2003 du 6 novembre 2003.

Selon un autre mode de réalisation, la composition lipidique de l'invention est caractérisée en ce que l'huile végétale contenant d'une part d'environ 50 à environ 80% en poids d'acide linoléique (ω6) et d'autre part d'environ 20 à environ 200 mg/100 g d'α-tocophérol est choisie parmi notamment l'huile de tournesol, l'huile de germes de maïs, l'huile de carthame, l'huile de pépins de raisin, l'huile de germes de blé, l'huile de coton, l'huile de pépins de pomme.

Selon un autre mode de réalisation, la composition lipidique de l'invention est caractérisée en ce qu'elle comprend également environ 4 à environ 24%, de préférence environ 5 à environ 19% en poids d'huile de tournesol. L'huile de tournesol permet en effet d'apporter à la composition revendiquée une quantité substantielle d'acide linoléique, en contenant à l'état pur entre environ 55 et 68% de cet acide gras, selon les variétés de tournesol et/ou les conditions de récolte, et donc d'équilibrer l'apport important d'acide oléique provenant des huiles de colza et d'olive pour obtenir in fine un rapport acide oléique/acide linoléique dans la plage revendiquée de 1,9 à 2,8. Elle est également, après l'huile de germe de blé, l'huile courante apportant le plus d'α-tocophérol naturel, entre environ 50 et 80 mg/100 g, permettant ainsi de compenser dans la composition revendiquée l'insuffisance de l'huile d'olive en α-tocophérol naturel.

Selon un autre mode de réalisation, la composition lipidique de l'invention est caractérisée en ce qu'elle comprend également environ 1% à environ 23%, de préférence environ 5 à environ 13% en poids d'huile de pépins de raisin. Mieux que l'huile de tournesol, l'huile de pépins de raisin permet d'apporter à la composition revendiquée une quantité plus substantielle d'acide linoléique, en contenant à l'état pur entre environ 65 et 75% de cet acide gras, selon les sources d'approvisionnement, et donc d'équilibrer l'apport important d'acide oléique provenant des huiles de colza et d'olive pour obtenir in fine un rapport acide oléique/acide linoléique dans la plage revendiquée de 1,9 à 2,8. En particulier dans le cas où la préparation de la composition revendiquée est réalisée avec une huile de colza incorporée à un maximum de 67% en raison d'une possible teneur en acide alpha-linolénique basse avoisinant 7,5%.

Dans la composition de l'invention, l'huile de colza qui est la source d'acide alpha-linolénique peut être partiellement remplacée par une huile susceptible d'apporter à son tour de l'acide alpha-linoléique, telle que l'huile de soja ou l'huile de lin alimentaire ou l'huile de cameline ou l'huile de périlla.

De façon avantageuse, environ 4 à environ 10%, de préférence environ 5 à environ 8% en poids d'huile de soja peut être utilisée en remplacement partiel du poids sensiblement correspondant d'huile de colza. L'huile de soja présente en effet l'avantage d'apporter une quantité notable d'acide linoléique, en contenant à l'état pur entre environ 49 et 55% de cet acide gras en même temps qu'elle apporte l'acide alpha-linolénique, entre environ 6 et 9% de cet acide gras, à des teneurs voisines de celles de l'huile de colza. Elle permet donc d'équilibrer la composition revendiquée entre les différentes classes d'acides gras monoinsaturés et polyinsaturés.

De façon avantageuse, environ 0,8% à environ 3% ou environ 0,8% à environ 3,5%, de préférence environ 1% à environ 2% ou environ 1% à environ 3% d'huile de lin peut être utilisée en remplacement partiel de l'huile de colza dans un rapport de remplacement d'environ 1/6 à environ 1/9 ou d'environ 1/7 à environ 1/10. Ceci signifie qu'une partie en poids d'huile de lin peut remplacer 6 à 9 ou 7 à 10 parties en poids d'huile de colza. L'huile de lin est en effet considérée comme huile alimentaire dans certains pays de l'Union Européenne et constitue pour des mélanges d'huiles, telle la composition revendiquée, une source très riche en acide alpha-linolénique, comprise en moyenne entre 55 et 60%. Son incorporation à faible teneur permet donc par exemple de pallier avantageusement une insuffisance de la teneur en acide alpha-linolénique de l'huile de colza, pour des raisons variétales et/ou climatiques, et de garantir une teneur en acide alpha-linolénique dans la composition revendiquée comprise entre 4,5 et 6,5 g par 100g d'huile.

De la même façon, une partie de l'huile de colza peut également être remplacée par de l'huile de cameline. Cette huile contient en effet entre 30 et 39% d'acide alpha-linolénique.

De façon avantageuse, la composition lipidique de l'invention est caractérisée en ce qu'elle comprend également environ 1% à environ 7%, de préférence environ 5% à environ 6% en poids d'huile de cameline, l'huile de cameline étant utilisée en remplacement de l'huile de colza dans un rapport de remplacement d'environ 1/4 à environ 1/6. Ceci signifie qu'une partie en poids d'huile de cameline peut remplacer 4 à 6 parties en poids d'huile de colza.

De même, une partie de l'huile de colza peut également être remplacée par de l'huile de périlla. Cette huile est en effet très riche en acide alpha-linolénique, en contenant à l'état pur entre 60 et 68%.

De façon avantageuse, la composition lipidique de l'invention est caractérisée en ce qu'elle comprend également environ 0,7 à environ 1%, de préférence environ 0,8% en poids d'huile de périlla, l'huile de périlla étant utilisée en remplacement partiel de l'huile de colza dans un rapport de remplacement d'environ 1/6 à environ 1/9. Ceci signifie qu'une partie en poids d'huile de périlla peut remplacer 6 à 9 parties en poids d'huile de colza.

Dans les compositions de l'invention, l'huile de tournesol qui apporte l'acide linoléique peut être remplacée totalement (voir exemple 9) ou en partie par l'huile de germes de maïs. L'huile de germes de maïs permet en effet d'apporter aussi à la composition revendiquée une quantité substantielle d'acide linoléique, en contenant à l'état pur entre environ 53 et 58% de cet acide gras, selon les sources, et donc d'équilibrer l'apport important d'acide oléique provenant des huiles de colza et d'olive pour obtenir in fine un rapport acide oléique/acide linoléique dans la plage revendiquée de 1,9 à 2,8.

De façon avantageuse, la composition lipidique de l'invention est caractérisée en ce qu'elle comprend également environ 8 à environ 14%, de préférence environ 9 à environ 12% en poids d'huile de germes de maïs, l'huile de germes de maïs étant utilisée en remplacement de l'huile de tournesol dans un rapport de remplacement d'environ 1/1 à environ 1,3/1. Ceci signifie qu'une partie en poids d'huile de tournesol peut être remplacée par 1 à 1,3 parties en poids d'huile de germes de maïs.

Dans les compositions de l'invention, l'huile de pépins de raisin peut être également remplacée partiellement par l'huile de germes de maïs pour les mêmes raisons que précédemment.

De façon avantageuse, la composition lipidique de l'invention est caractérisée en ce qu'elle comprend également environ 8 à environ 14%, de préférence environ 9 à environ 12% en poids d'huile de germes de maïs, l'huile de germes de maïs étant utilisée en remplacement de l'huile de pépins de raisin dans un rapport de remplacement d'environ 1,2/1 à environ 1,3/1. Ceci signifie qu'une partie en poids d'huile de pépins de raisin peut être remplacée par 1,2 à 1,3 parties en poids d'huile de germes de maïs.

Dans les compositions de l'invention, l'huile de pépins de raisin peut être également utilement remplacée partiellement ou totalement par l'huile de carthame. Cette dernière constitue en effet une source particulièrement riche en acide linoléique, en contenant à l'état pur entre environ 72 et 80% de cet acide gras, selon les sources. L'huile de carthame permet donc d'équilibrer l'apport important d'acide oléique provenant des huiles de colza et d'olive pour obtenir in fine un rapport acide oléique/acide linoléique dans la plage revendiquée de 1,9 à 2,6. En particulier lorsque la composition revendiquée est réalisée avec une huile de colza devant être surdosée à un maximum de 67% lorsqu'elle contient une basse teneur en acide alpha-linolénique avoisinant 7,5%.

De façon avantageuse, la composition lipidique de l'invention est caractérisée en ce qu'elle comprend également environ 2 à environ 13%, de préférence environ 4% à environ 11% en poids d'huile de carthame, l'huile de carthame étant utilisée en remplacement de l'huile de pépins de raisin dans un rapport de remplacement d'environ 0,8/1 à environ 1/1. Ceci signifie qu'une partie en poids d'huile de carthame peut remplacer 0,8 à 1 partie en poids d'huile de pépins de raisin.

Dans un mode de réalisation avantageux, la composition lipidique de l'invention est composée préférentiellement d'une part d'huile d'olive vierge extra, d'autre part de l'ensemble des autres huiles mises en oeuvre sous leur forme raffinée.

Selon un autre mode de réalisation avantageux, la composition lipidique de l'invention comprend :
- environ 0,03 à environ 0,04% ou environ 0,03 à environ 0,05% d'acide gras C 14:0 (acide myristique),
- environ 5,90 à environ 6,60% d'acide gras C16:0 (acide palmitique),
- environ 0,30 à environ 0,40% d'acide gras C16:1 (acide palmitoléique),
- environ 0,05 à environ 0,07% d'acide gras C17:0 (acide heptadecanoïque),
- environ 0,05 à environ 0,09% ou environ 0,07 à environ 0,09% d'acide gras C17:1 (acide heptadecenoïque),
- environ 2,30 à environ 2,8% d'acide gras C18:0 (acide stéarique),
- environ 53,0 à environ 61,0% d'acide gras C18:1 (acide oléique),
- environ 21,0 à environ 29,0% d'acide gras C18:2 ω6 (acide linoléique),
- environ 4,5 à environ 6,5% d'acide gras C18:3 ω3 (acide linolénique),
- environ 0,40 à environ 0,60% d'acide gras C20:0 (acide arachidique),
- environ 0,80 à environ 1,00% d'acide gras C20:1 (acide gadoléique),
- environ 0,04 à environ 0,06% d'acide gras C20:2 (acide eicosadienoïque),
- environ 0,20 à environ 0,40% d'acide gras C22:0 (acide béhénique),
- environ 0,10 à environ 0,30% d'acide gras C22:1 (acide érucique),
- environ 0,07 à environ 0,15% d'acide gras C24:0 (acide lignocérique), et
- environ 0,07 à environ 0,15% d'acide gras C24:1 (acide selacholéique).

Selon un autre mode de réalisation avantageux, la composition lipidique de l'invention comprend :
- environ 0,04% d'acide gras C14:0 (acide myristique),
- environ 6,29% d'acide gras C16:0 (acide palmitique),
- environ 0,34% d'acide gras C16:1 (acide palmitoléique),
- environ 0,06% d'acide gras C17:0 (acide heptadecanoïque),
- environ 0,08% d'acide gras C17:1 (acide heptadecenoïque),
- environ 2,61 % d'acide gras C18:0 (acide stéarique),
- environ 57,20% d'acide gras C18:1 (acide oléique),
- environ 25,44% d'acide gras C18:2 ω6 (acide linoléique),
- environ 5,40% d'acide gras C18:3 ω3 (acide linolénique),
- environ 0,48% d'acide gras C20:0 (acide arachidique),
- environ 0,87% d'acide gras C20:1 (acide gadoléique),
- environ 0,05% d'acide gras C20:2 (acide eicosadienoïque),
- environ 0,30% d'acide gras C22:0 (acide béhénique),
- environ 0,15% d'acide gras C22:1 (acide érucique),
- environ 0,08% d'acide gras C24:0 (acide lignocérique), et
- environ 0,09% d'acide gras C24:1 (acide selacholéique).

Une composition lipidique avantageuse de l'invention comprend :
- environ 22 à environ 26% d'huile d'olive, notamment d'huile d'olive vierge ou vierge extra,
- environ 53 à environ 63% d'huile de colza, notamment d'huile de colza raffinée,
- environ 5 à environ 19% d'huile de tournesol, notamment d'huile de tournesol raffinée, et
- environ 5 à environ 13% d'huile de pépins de raisin, notamment d'huile de pépins de raisin raffinée.

Une autre composition lipidique avantageuse de l'invention comprend :
- environ 24% d'huile d'olive, notamment d'huile d'olive vierge ou vierge extra,
- environ 58% d'huile de colza, notamment d'huile de colza raffinée,
- environ 7% d'huile de tournesol, notamment d'huile de tournesol raffinée, et
- environ 11% d'huile de pépins de raisin, notamment d'huile de pépins de raisin raffinée.

La composition lipidique peut aussi être avantageusement dépourvue d'huile d'OGM (organismes génétiquement modifiés) en comprenant :
- environ 24% d'huile d'olive, notamment d'huile d'olive vierge ou vierge extra, de facto non OGM,
- environ 58% d'huile de colza raffinée d'origine française à identité préservée non OGM,
- environ 7% d'huile de tournesol, notamment d'huile de tournesol raffinée, de facto non OGM, et
- environ 11% d'huile de pépins de raisin, notamment d'huile de pépins de raisin raffinée, de facto non OGM.

L'obtention d'une telle composition dépourvue d'OGM s'obtient, outre le choix des huiles ci-dessus indiquées, par le respect des bonnes pratiques industrielles correspondantes pour le stockage des huiles du mélange, leur assemblage et leur embouteillage, afin d'éviter une pollution croisée par toute huile susceptible de contenir des traces d'OGM.

Les compositions lipidiques de l'invention peuvent également comprendre de la vitamine D, notamment de la vitamine D3, à raison d'environ 10 à environ 150 µg de vitamine D par kg de composition lipidique, et notamment à raison de 50 µg de vitamine D par kg de composition lipidique.

Les compositions lipidiques, lorsqu'elles sont des huiles végétales, peuvent être avantageusement utilisées comme huiles d'assaisonnement ou comme huiles de cuisson ou comme huiles de friture ou encore comme huiles multi-usages.

Les compositions lipidiques de l'invention peuvent être utilisées pour la préparation de compositions à base d'huile végétale, notamment des préparations huileuses aromatiques et/ou aromatisées.

Les compositions lipidiques de l'invention peuvent également être utilisées pour la préparation de compositions condimentaires, émulsionnées ou non, à base d'huile végétale, notamment des mayonnaises, des mayonnaises allégées, des sauces pour salades et crudités, des vinaigrettes, des sauces vinaigrettes, des sauces culinaires destinées à l'assaisonnement et/ou à l'accompagnement des plats.

Les compositions lipidiques de l'invention peuvent aussi être utilisées sous forme de compléments alimentaires, notamment des capsules ou des gélules.

Les compositions lipidiques de l'invention peuvent également être utilisées pour préparer des compositions à base de lait et/ou dérivés laitiers, notamment des laits et des préparations laitières, pouvant incorporer de l'huile végétale, notamment des crèmes, laits fermentés, yoghourts, sauces, fromages et desserts lactés.

Dans les préparations huileuses aromatiques, la composition lipidique peut représenter jusqu'à 100% et de préférence de 95% à 100% en poids.

Dans les compositions émulsionnées ou non à base d'huiles végétales, la composition lipidique peut représenter de 5 à 85% et de préférence de 15% à 80% en poids.

Dans les compositions à base de lait et/ou dérivés laitiers, la composition lipidique peut représenter de 1 à 75% et de préférence de 5% à 65% en poids.

L'invention est illustrée ci-après par des exemples de compositions, donnés à titre illustratif.

Dans les exemples 1 à 23, on indique la teneur en huiles en % en poids, le mélange des huiles pré-pesées étant réalisé en seau inox alimentaire de 20 litres, la quantité de mélange étant de 15 kg, de façon à obtenir in fine 15 litres de produit compte tenu des pertes opératoires. L'agitation est modérée par exemple à l'aide d'un agitateur électrique à pales type Turbotest Rayneri (Société VMI, Montaigu, France) tournant à une vitesse de 900 t/mn, pendant 45 minutes, ces conditions d'agitation modérées permettant d'éviter la formation d'un vortex et donc l'aération préjudiciable de l'huile.

L'huile d'olive vierge extra utilisée est par exemple l'huile d'olive commercialisée sous la marque LESIEUR Olive. Il s'agit d'un assemblage d'huiles d'olive vierge extra de différentes origines géographiques et de différents âges, qui confèrent au produit un goût régulier tout au long de l'année. Son profil est celle d'un fruité équilibré vert-mûr, d'une intensité moyenne, sans excès d'amertume et de piquant. Elle provient de l'usine LESIEUR d'Aix-en-Provence. Elle respecte l'ensemble des critères de pureté et de qualité exigés dans le règlement européen n° 1989/2003 du 6 novembre 2003. En particulier son acidité oléique est inférieure à 0,8%.

L'huile de colza raffinée est prélevée par exemple dans la cuve de stockage d'huile raffinée de l'usine LESIEUR de Coudekerque-Branche. Son acidité oléique est inférieure à 0,1 %, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de tournesol raffinée est par exemple prélevée dans la cuve de stockage d'huile raffinée de l'usine LESIEUR de Coudekerque-Branche. Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de pépins de raisin raffinée est par exemple prélevée dans la cuve de stockage d'huile raffinée de l'usine LESIEUR de Coudekerque-Branche. Son acidité oléique est inférieure à 0,1 %, son humidité inférieure à 0,07%, son alcalinité inférieure à 6 ppm, son indice de peroxydes inférieur à 2 meq/kg et sa teneur en phosphore inférieure à 5 ppm. Elle est jugée neutre de goût.

L'huile de maïs raffinée est prélevée par exemple dans la cuve de stockage d'huile raffinée de l'usine LESIEUR de Coudekerque-Branche. Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de soja raffinée provient par exemple de la société Cargill (B-Antwerpen) ou de la société ADM (NL-Rotterdam-Europort). Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de carthame raffinée provient par exemple de la société Bunge Europe (D-Mannheim). Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de lin a été raffinée au Laboratoire de Recherches Lesieur à partir d'une huile de lin brute de pression provenant de la société Vandeputte (B-Mouscron). Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de cameline a été raffinée au Laboratoire de Recherches Lesieur à partir d'une huile de cameline vierge du commerce. Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

Le mélange obtenu est conditionné dans des bouteilles en PET transparentes de contenance 1 litre (bouteille huile ISIO4), bouchées manuellement avec des bouchons industriels (bouchons huile ISIO4), pour servir par exemple aux différents tests de Conservation (tests accélérés, tests d'usage ménager et conservation commerciale en cartons).

Dans chacun des tableaux des exemples, on a indiqué la composition des principaux acides gras et la teneur en alpha-tocophérol (vitamine E) des mélanges, pour 100 g de composition et pour une cuillère à soupe de 10 g de composition.

Les abréviations ont les significations suivantes :
**CAS :** cuillère à soupe de 10g d'huile
**OL :** acide oléique (ω9)
**LA :** acide linoléique (ω6)
**ALA :** acide alpha-linolénique (ω3)
**ANC :** apport nutritionnel conseillé (Apports Nutritionnels Conseillés pour la population française -ANC 2001 - 3e édition - Editions Tec & Doc)

On rappelle que les ANC en acides gras essentiels sont pour l'homme adulte :

| | |
|---|---|
| Acide linoléique : | 10 g/j |
| Acide alpha-linolénique : | 2 g/j |
| α-tocophérol (vitamine E) | 12 mg/j |

### Exemple 1

| **Huile** | % en poids |
|---|---|
| Huile de colza | 58,0 |
| Huile d'olive | 24,0 |
| Huile de pépins de raisin | 11,0 |
| Huile de tournesol | 7,0 |

| **Composition en acides gras** | g pour 100g | g par CAS | % ANC |
|---|---|---|---|
| Acides gras saturés | 9,9 | 1,0 | |
| Acides gras monoinsaturés | 56,9 | 5,7 | |
| Acides gras polyinsaturés | 32,4 | 3,2 | |
| | | | |
| Acide oléique | 55,7 | 5,6 | |
| Acide linoléique | 27,0 | 2,7 | 27 |
| Acide α-linolénique | 5,4 | 0,5 | 27 |

| | mg pour 100 g | mg par CAS | % ANC |
|---|---|---|---|
| α-tocophérol (vitamine E) | 26,1 | 2,6 | 22 |

| | |
|---|---|
| Rapport LA/ALA | 5,0 |
| Rapport OL/LA | 2,1 |
| Rapport mono/polyinsaturés | 1,8 |

### Exemple 2

| **Huile** | % en poids |
|---|---|
| Huile de colza | 52,0 |
| Huile d'olive | 28,0 |
| Huile de pépins de raisin | 7,0 |
| Huile de tournesol | 5,0 |
| Huile de soja | 8,0 |

| **Composition en acides gras** | g pour 100g | g par CAS | % ANC |
|---|---|---|---|
| Acides gras saturés | 10,6 | 1,1 | |
| Acides gras monoinsaturés | 57,0 | 5,7 | |
| Acides gras polyinsaturés | 31,5 | 3,1 | |
| | | | |
| Acide oléique | 55,9 | 5,6 | |
| Acide linoléique | 26,1 | 2,6 | 26 |
| Acide α-linolénique | 5,4 | 0,5 | 26 |

| | mg pour 100 g | mg par CAS | % ANC |
|---|---|---|---|
| α-tocophérol (vitamine E) | 24,1 | 2,4 | 20 |

| | |
|---|---|
| Rapport LA/ALA | 4,8 |
| Rapport OL/LA | 2,1 |
| Rapport mono/polyinsaturés | 1,8 |

### Exemple 3

| **Huile** | % en poids |
|---|---|
| Huile de colza | 52,0 |
| Huile d'olive | 28,0 |
| Huile de tournesol | 12,0 |
| Huile de soja | 8,0 |

| **Composition en acides gras** | g pour 100g | g par CAS | % ANC |
|---|---|---|---|
| Acides gras saturés | 10,7 | 1,1 | |
| Acides gras monoinsaturés | 57,4 | 5,8 | |
| Acides gras polyinsaturés | 31,0 | 3,1 | |
| | | | |
| Acide oléique | 56,3 | 5,7 | |
| Acide linoléique | 25,6 | 2,5 | 25 |
| Acide α-linolénique | 5,4 | 0,5 | 26 |

| | mg pour 100 g | mg par CAS | % ANC |
|---|---|---|---|
| α-tocophérol (vitamine E) | 27,5 | 2,7 | 23 |

| | |
|---|---|
| Rapport LA/ALA | 4,7 |
| Rapport OL/LA | 2,2 |
| Rapport mono/polyinsaturés | 1,9 |

### Exemple 4

| **Huile** | % en poids |
|---|---|
| Huile de colza | 56,0 |
| Huile d'olive | 24,0 |
| Huile de tournesol | 15,0 |
| Huile de soja | 5,0 |

| **Composition en acides gras** | g pour 100g | g par CAS | % ANC |
|---|---|---|---|
| Acides gras saturés | 10,3 | 1,0 | |
| Acides gras monoinsaturés | 56,7 | 5,7 | |
| Acides gras polyinsaturés | 32,0 | 3,2 | |
| | | | |
| Acide oléique | 55,6 | 5,6 | |
| Acide linoléique | 26,5 | 2,6 | 26 |
| Acide α-linolénique | 5,5 | 0,6 | 28 |

| | mg pour 100 g | mg par CAS | % ANC |
|---|---|---|---|
| α-tocophérol (vitamine E) | 29,7 | 3,0 | 25 |

| | |
|---|---|
| Rapport LA/ALA | 4,8 |
| Rapport OL/LA | 2,1 |
| Rapport mono/polyinsaturés | 1,8 |

### Exemple 5

| **Huile** | % en poids |
|---|---|
| Huile de colza | 60,0 |
| Huile d'olive | 24,0 |
| Huile de tournesol | 11,0 |
| Huile de soja | 5,0 |

| **Composition en acides gras** | g pour 100g | g par CAS | % ANC |
|---|---|---|---|
| Acides gras saturés | 10,2 | 1,0 | |
| Acides gras monoinsaturés | 58,2 | 5,8 | |
| Acides gras polyinsaturés | 30,7 | 3,1 | |
| | | | |
| Acide oléique | 57,0 | 5,7 | |
| Acide linoléique | 24,8 | 2,5 | 25 |
| Acide α-linolénique | 5,9 | 0,6 | 29 |

| | mg pour 100 g | mg par CAS | % ANC |
|---|---|---|---|
| vitamine E (α-tocophérol) | 28,3 | 2,8 | 24 |

| | |
|---|---|
| Rapport LA/ALA | 4,2 |
| Rapport OL/LA | 2,3 |
| Rapport mono/polyinsaturés | 1,9 |

### Exemple 6

| **Huile** | % en poids |
|---|---|
| Huile de colza | 61,0 |
| Huile d'olive | 25,0 |
| Huile de maïs | 10,0 |
| Huile de pépins de raisin | 4,0 |

| **Composition en acides gras** | g pour 100g | g par CAS | % ANC |
|---|---|---|---|
| Acides gras saturés | 10,1 | 1,0 | |
| Acides gras monoinsaturés | 59,4 | 5,9 | |
| Acides gras polyinsaturés | 29,6 | 3,0 | |
| | | | |
| Acide oléique | 58,2 | 5,8 | |
| Acide linoléique | 23,8 | 2,4 | 24 |
| Acide α-linolénique | 5,8 | 0,6 | 29 |

| | mg pour 100 g | mg par CAS | % ANC |
|---|---|---|---|
| vitamine E (α-tocophérol) | 23,8 | 2,4 | 20 |

| | |
|---|---|
| Rapport LA/ALA | 4,1 |
| Rapport OL/LA | 2,4 |
| Rapport mono/polyinsaturés | 2,0 |

### Exemple 7

| **Huile** | % en poids |
|---|---|
| Huile de colza | 61,0 |
| Huile d'olive | 25,0 |
| Huile de maïs | 10,0 |
| Huile de tournesol | 4,0 |

| **Composition en acides gras** | g pour 100g | g par CAS | % ANC |
|---|---|---|---|
| Acides gras saturés | 10,2 | 1,0 | |
| Acides gras monoinsaturés | 59,6 | 6,0 | |
| Acides gras polyinsaturés | 29,3 | 2,9 | |
| | | | |
| Acide oléique | 58,4 | 5,8 | |
| Acide linoléique | 23,5 | 2,4 | 24 |
| Acide α-linolénique | 5,8 | 0,6 | 29 |

| | mg pour 100 g | mg par CAS | % ANC |
|---|---|---|---|
| vitamine E (α-tocophérol) | 25,7 | 2,6 | 21 |

| | |
|---|---|
| Rapport LA/ALA | 4,1 |
| Rapport OL/LA | 2,5 |
| Rapport mono/polyinsaturés | 2,0 |

### Exemple 8

| **Huile** | % en poids |
|---|---|
| Huile de colza | 61,0 |
| Huile d'olive | 25,0 |
| Huile de maïs | 14,0 |

| **Composition en acides gras** | g pour 100g | g par CAS | % ANC |
|---|---|---|---|
| Acides gras saturés | 10,6 | 1,0 | |
| Acides gras monoinsaturés | 59,9 | 6,0 | |
| Acides gras polyinsaturés | 29,0 | 2,9 | |
| | | | |
| Acide oléique | 58,7 | 5,9 | |
| Acide linoléique | 23,2 | 2,3 | 23 |
| Acide α-linolénique | 5,8 | 0,6 | 29 |

| | mg pour 100 g | mg par CAS | % ANC |
|---|---|---|---|
| vitamine E (α-tocophérol) | 24,0 | 2,4 | 20 |

| | |
|---|---|
| Rapport LA/ALA | 4,0 |
| Rapport OL/LA | 2,5 |
| Rapport mono/polyinsaturés | 2,1 |

### Exemple 9

| **Huile** | % en poids |
|---|---|
| Huile de colza | 65,0 |
| Huile d'olive | 24,0 |
| Huile de tournesol | 11,0 |

| **Composition en acides gras** | g pour 100g | g par CAS | % ANC |
|---|---|---|---|
| Acides gras saturés | 9,8 | 1,0 | |
| Acides gras monoinsaturés | 60,0 | 6,0 | |
| Acides gras polyinsaturés | 29,3 | 2,9 | |
| | | | |
| Acide oléique | 58,8 | 5,9 | |
| Acide linoléique | 23,3 | 2,3 | 23 |
| Acide α-linolénique | 6,0 | 0,6 | 30 |

| | mg pour 100 g | mg par CAS | % ANC |
|---|---|---|---|
| vitamine E (α-tocophérol) | 29,1 | 2,9 | 24 |

| | |
|---|---|
| Rapport LA/ALA | 3,9 |
| Rapport OL/LA | 2,5 |
| Rapport mono/polyinsaturés | 2,0 |

### Exemple 10

| **Huile** | % en poids |
|---|---|
| Huile de colza | 65,0 |
| Huile d'olive | 24,0 |
| Huile de pépins de raisin | 6,0 |
| Huile de tournesol | 5,0 |

| **Composition en acides gras** | g pour 100g | g par CAS | % ANC |
|---|---|---|---|
| Acides gras saturés | 9,7 | 1,0 | |
| Acides gras monoinsaturés | 59,7 | 6,0 | |
| Acides gras polyinsaturés | 29,7 | 3,0 | |
| | | | |
| Acide oléique | 58,5 | 5,8 | |
| Acide linoléique | 23,7 | 2,4 | 24 |
| Acide α-linolénique | 6,0 | 0,6 | 30 |

| | mg pour 100 g | mg par CAS | % ANC |
|---|---|---|---|
| vitamine E (α-tocophérol) | 26,2 | 2,6 | 22 |

| | |
|---|---|
| Rapport LA/ALA | 3,9 |
| Rapport OL/LA | 2,5 |
| Rapport mono/polyinsaturés | 2,0 |

### Exemple 11

| **Huile** | % en poids |
|---|---|
| Huile de colza | 67,0 |
| Huile d'olive | 21,0 |
| Huile de pépins de raisin | 7,0 |
| Huile de tournesol | 5,0 |

| **Composition en acides gras** | g pour 100g | g par CAS | % ANC |
|---|---|---|---|
| Acides gras saturés | 9,5 | 0,9 | |
| Acides gras monoinsaturés | 58,8 | 5,9 | |
| Acides gras polyinsaturés | 30,8 | 3,0 | |
| | | | |
| Acide oléique | 57,5 | 5,8 | |
| Acide linoléique | 24,6 | 2,4 | 24 |
| Acide α-linolénique | 6,2 | 0,6 | 22 |

| | mg pour 100 g | mg par CAS | % ANC |
|---|---|---|---|
| vitamine E (α-tocophérol) | 26,5 | 2,7 | 22 |

| | |
|---|---|
| Rapport LA/ALA | 4,0 |
| Rapport OL/LA | 2,3 |
| Rapport mono/polyinsaturés | 1,9 |

### Exemple 12

| **Huile** | % en poids |
|---|---|
| Huile de colza | 62,0 |
| Huile d'olive | 27,0 |
| Huile de pépins de raisin | 6,0 |
| Huile de tournesol | 5,0 |

| **Composition en acides gras** | g pour 100g | g par CAS | % ANC |
|---|---|---|---|
| Acides gras saturés | 9,9 | 1,0 | |
| Acides gras monoinsaturés | 60,2 | 6,0 | |
| Acides gras polyinsaturés | 29,0 | 2,9 | |
| | | | |
| Acide oléique | 59,0 | 5,9 | |
| Acide linoléique | 23,3 | 2,3 | 23 |
| Acide α-linolénique | 5,8 | 0,6 | 29 |

| | mg pour 100 g | mg par CAS | % ANC |
|---|---|---|---|
| vitamine E (α-tocophérol) | 25,8 | 2,6 | 21 |

| | |
|---|---|
| Rapport LA/ALA | 4,0 |
| Rapport OL/LA | 2,5 |
| Rapport mono/polyinsaturés | 2,1 |

### Exemple 13

| **Huile** | % en poids |
|---|---|
| Huile de colza | 48,0 |
| Huile d'olive | 28,0 |
| Huile de lin | 1,0 |
| Huile de tournesol | 23,0 |

| **Composition en acides gras** | g pour 100g | g par CAS | % ANC |
|---|---|---|---|
| Acides gras saturés | 10,6 | 1,1 | |
| Acides gras monoinsaturés | 55,9 | 5,6 | |
| Acides gras polyinsaturés | 32,8 | 3,3 | |
| | | | |
| Acide oléique | 54,8 | 5,5 | |
| Acide linoléique | 27,7 | 2,8 | 28 |
| Acide α-linolénique | 5,1 | 0,5 | 25 |

| | mg pour 100 g | mg par CAS | % ANC |
|---|---|---|---|
| vitamine E (α-tocophérol) | 32,3 | 3,2 | 27 |

| | |
|---|---|
| Rapport LA/ALA | 5,4 |
| Rapport OL/LA | 2,0 |
| Rapport mono/polyinsaturés | 1,7 |

### Exemple 14

| **Huile** | % en poids |
|---|---|
| Huile de colza | 45,0 |
| Huile d'olive | 28,0 |
| Huile de lin | 3,0 |
| Huile de tournesol | 24,0 |

| **Composition en acides gras** | g pour 100g | g par CAS | % ANC |
|---|---|---|---|
| Acides gras saturés | 10,6 | 1,1 | |
| Acides gras monoinsaturés | 54,6 | 5,4 | |
| Acides gras polyinsaturés | 34,1 | 3,4 | |
| | | | |
| Acide oléique | 53,6 | 5,4 | |
| Acide linoléique | 28,0 | 2,8 | 28 |
| Acide α-linolénique | 6,1 | 0,6 | 30 |

| | mg pour 100 g | mg par CAS | % ANC |
|---|---|---|---|
| vitamine E (α-tocophérol) | 32,1 | 3,2 | 27 |

| | |
|---|---|
| Rapport LA/ALA | 4,6 |
| Rapport OL/LA | 1,9 |
| Rapport mono/polyinsaturés | 1,6 |

### Exemple 15

| **Huile** | % en poids |
|---|---|
| Huile de colza | 49,0 |
| Huile d'olive | 24,0 |
| Huile de lin | 3,0 |
| Huile de tournesol | 24,0 |

| **Composition en acides gras** | g pour 100g | g par CAS | % ANC |
|---|---|---|---|
| Acides gras saturés | 10,3 | 1,0 | |
| Acides gras monoinsaturés | 54,0 | 5,4 | |
| Acides gras polyinsaturés | 34,9 | 3,5 | |
| | | | |
| Acide oléique | 52,9 | 5,3 | |
| Acide linoléique | 28,5 | 2,9 | 29 |
| Acide α-linolénique | 6,4 | 0,6 | 30 |

| | mg pour 100 g | mg par CAS | % ANC |
|---|---|---|---|
| vitamine E (α-tocophérol) | 32,7 | 3,3 | 27 |

| | |
|---|---|
| Rapport LA/ALA | 4,5 |
| Rapport OL/LA | 1,9 |
| Rapport mono/polyinsaturés | 1,5 |

### Exemple 16

| **Huile** | % en poids |
|---|---|
| Huile de colza | 50,0 |
| Huile d'olive | 26,0 |
| Huile de lin | 1,0 |
| Huile de tournesol | 23,0 |

| **Composition en acides gras** | g pour 100g | g par CAS | % ANC |
|---|---|---|---|
| Acides gras saturés | 10,4 | 1,0 | |
| Acides gras monoinsaturés | 55,5 | 5,6 | |
| Acides gras polyinsaturés | 33,3 | 3,3 | |
| | | | |
| Acide oléique | 54,5 | 5,4 | |
| Acide linoléique | 28,0 | 2,8 | 28 |
| Acide α-linolénique | 5,3 | 0,5 | 27 |

| | mg pour 100 g | mg par CAS | % ANC |
|---|---|---|---|
| vitamine E (α-tocophérol) | 32,6 | 3,3 | 27 |

| | |
|---|---|
| Rapport LA/ALA | 5,3 |
| Rapport OL/LA | 1,9 |
| Rapport mono/polyinsaturés | 1,7 |

### Exemple 17

| **Huile** | % en poids |
|---|---|
| Huile de colza | 54,0 |
| Huile d'olive | 24,0 |
| Huile de cameline | 2,0 |
| Huile de tournesol | 20,0 |

| **Composition en acides gras** | g pour 100g | g par CAS | % ANC |
|---|---|---|---|
| Acides gras saturés | 10,2 | 1,0 | |
| Acides gras monoinsaturés | 56,2 | 5,6 | |
| Acides gras polyinsaturés | 32,8 | 3,3 | |
| | | | |
| Acide oléique | 54,8 | 5,5 | |
| Acide linoléique | 27,0 | 2,7 | 27 |
| Acide α-linolénique | 5,7 | 3,2 | 28 |

| | mg pour 100 g | mg par CAS | % ANC |
|---|---|---|---|
| vitamine E (α-tocophérol) | 31,7 | 3,2 | 26 |

| | |
|---|---|
| Rapport LA/ALA | 4,7 |
| Rapport OL/LA | 2,0 |
| Rapport mono/polyinsaturés | 1,7 |

### Exemple 18

| **Huile** | % en poids |
|---|---|
| Huile de colza | 45,0 |
| Huile d'olive | 28,0 |
| Huile de cameline | 7,0 |
| Huile de tournesol | 20,0 |

| **Composition en acides gras** | g pour 100g | g par CAS | % ANC |
|---|---|---|---|
| Acides gras saturés | 10,6 | 1,1 | |
| Acides gras monoinsaturés | 55,6 | 5,6 | |
| Acides gras polyinsaturés | 33,1 | 3,3 | |
| | | | |
| Acide oléique | 53,4 | 5,3 | |
| Acide linoléique | 26,4 | 2,6 | 26 |
| Acide α-linolénique | 6,5 | 0,6 | 32 |

| | mg pour 100 g | mg par CAS | % ANC |
|---|---|---|---|
| vitamine E (α-tocophérol ) | 29,7 | 3,0 | 25 |

| | |
|---|---|
| Rapport LA/ALA | 4,1 |
| Rapport OL/LA | 2,0 |
| Rapport mono/polyinsaturés | 1,7 |

### Exemple 19

| **Huile** | % en poids |
|---|---|
| Huile de colza | 51,0 |
| Huile d'olive | 24,0 |
| Huile de cameline | 3,0 |
| Huile de tournesol | 11,0 |
| Huile de pépin de raisin | 11,0 |

| **Composition en acides gras** | g pour 100g | g par CAS | % ANC |
|---|---|---|---|
| Acides gras saturés | 10,2 | 1,0 | |
| Acides gras monoinsaturés | 54,7 | 5,5 | |
| Acides gras polyinsaturés | 34,4 | 3,4 | |
| | | | |
| Acide oléique | 53,1 | 5,3 | |
| Acide linoléique | 28,6 | 2,9 | 29 |
| Acide α-linolénique | 5,7 | 0,6 | 29 |

| | mg pour 100 g | mg par CAS | % ANC |
|---|---|---|---|
| vitamine E (α-tocophérol) | 26,7 | 2,7 | 22 |

| | |
|---|---|
| Rapport LA/ALA | 5,0 |
| Rapport OL/LA | 1,9 |
| Rapport mono/polyinsaturés | 1,6 |

### Exemple 20

| **Huile** | % en poids |
|---|---|
| Huile de colza | 58,0 |
| Huile d'olive | 24,0 |
| Huile de carthame | 11,0 |
| Huile de tournesol | 7,0 |

| **Composition en acides gras** | g pour 100g | g par CAS | % ANC |
|---|---|---|---|
| Acides gras saturés | 9,7 | 1,0 | |
| Acides gras monoinsaturés | 56,3 | 5,6 | |
| Acides gras polyinsaturés | 33,2 | 3,3 | |
| | | | |
| Acide oléique | 55,2 | 5,5 | |
| Acide linoléique | 27,8 | 2,8 | 28 |
| Acide α-linolénique | 5,4 | 0,5 | 27 |

| | mg pour 100 g | mg par CAS | % ANC |
|---|---|---|---|
| vitamine E (α-tocophérol) | 29,7 | 3,0 | 25 |

| | |
|---|---|
| Rapport LA/ALA | 5,2 |
| Rapport OL/LA | 2,0 |
| Rapport mono/polyinsaturés | 1,7 |

### Exemple 21

| **Huile** | % en poids |
|---|---|
| Huile de colza | 58,0 |
| Huile d'olive | 24,0 |
| Huile de carthame | 6,0 |
| Huile de tournesol | 12,0 |

| **Composition en acides gras** | g pour 100g | g par CAS | % ANC |
|---|---|---|---|
| Acides gras saturés | 9,9 | 1,0 | |
| Acides gras monoinsaturés | 56,8 | 5,7 | |
| Acides gras polyinsaturés | 32,5 | 3,2 | |
| | | | |
| Acide oléique | 55,7 | 5,6 | |
| Acide linoléique | 27,1 | 2,7 | 27 |
| Acide α-linolénique | 5,4 | 0,5 | 27 |

| | mg pour 100 g | mg par CAS | % ANC |
|---|---|---|---|
| vitamine E (α-tocophérol) | 30,5 | 3,1 | 25 |

| | |
|---|---|
| Rapport LA/ALA | 5,0 |
| Rapport OL/LA | 2,1 |
| Rapport mono/polyinsaturés | 1,7 |

### Exemple 22

| **Huile** | % en poids |
|---|---|
| Huile de colza | 63,0 |
| Huile d'olive | 26,0 |
| Huile de carthame | 4,0 |
| Huile de tournesol | 7,0 |

| **Composition en acides gras** | g pour 100g | g par CAS | % ANC |
|---|---|---|---|
| Acides gras saturés | 9,8 | 1,0 | |
| Acides gras monoinsaturés | 59,9 | 6,0 | |
| Acides gras polyinsaturés | 29,4 | 2,9 | |
| | | | |
| Acide oléique | 58,7 | 5,9 | |
| Acide linoléique | 23,6 | 2,4 | 24 |
| Acide α-linolénique | 5,8 | 0,6 | 29 |

| | mg pour 100 g | mg par CAS | % ANC |
|---|---|---|---|
| vitamine E (α-tocophérol) | 28,2 | 2,8 | 23 |

| | |
|---|---|
| Rapport LA/ALA | 4,0 |
| Rapport OL/LA | 2,5 |
| Rapport mono/polyinsaturés | 2,0 |

### Exemple 23

| **Huile** | % en poids |
|---|---|
| Huile de colza | 63,0 |
| Huile d'olive | 26,0 |
| Huile de carthame | 7,0 |
| Huile de tournesol | 4,0 |

| **Composition en acides gras** | g pour 100g | g par CAS | % ANC |
|---|---|---|---|
| Acides gras saturés | 9,7 | 1,0 | |
| Acides gras monoinsaturés | 59,6 | 6,0 | |
| Acides gras polyinsaturés | 29,8 | 3,0 | |
| | | | |
| Acide oléique | 58,4 | 5,8 | |
| Acide linoléique | 24,0 | 2,4 | 24 |
| Acide α-linolénique | 5,8 | 0,6 | 29 |

| | mg pour 100 g | mg par CAS | % ANC |
|---|---|---|---|
| vitamine E (α-tocophérol) | 27,7 | 2,8 | 23 |

| | |
|---|---|
| Rapport LA/ALA | 4,1 |
| Rapport OL/LA | 2,4 |
| Rapport mono/polyinsaturés | 2,0 |

### Exemple 24

### Test de vieillissement accéléré (tableaux 1 et 2)

Les compositions lipidiques définies ci-dessus sont conditionnées dans des bouteilles en PET (polyéthylène téréphtalate) transparentes de contenance de 1 litre (bouteilles huile ISIO4 bouchées manuellement avec des bouchons industriels (bouchons huile ISIO4), avec un espace de tête résiduel d'environ 15 ml.

On applique à ces bouteilles un test de vieillissement accéléré de plusieurs semaines en les entreposant sur des étagères pendant des durées de 6 semaines à 12 semaines. Les conditions d'exposition sont à la lumière naturelle en intérieur, soit à l'exposition "ouest" (modérément intense) soit à l'exposition "nord" (très atténuée) et à la température ambiante (environ 18 à 22°C).

Les conditions d'exposition à la lumière sont les suivantes :
- soit à la lumière naturelle en intérieur, diffuse et modérément intense, c'est-à-dire avec un ensoleillement partiel dans une salle de laboratoire, exposée à l'ouest, dénommé ci-dessus et ci-après "exposition ouest" (modérément intense), correspondant à une exposition d'au moins 300 lux ;
- soit à la lumière naturelle en intérieur, très atténuée et diffuse, c'est-à-dire sans jamais d'ensoleillement dans une salle de laboratoire avec une seule fenêtre exposée au nord, dénommé ci-dessus et ci-après "exposition nord" (très atténuée), correspondant à une exposition de moins de 20 lux.

Ces conditions de vieillissement proviennent de nombreuses années d'expérience du Laboratoire de Recherches LESIEUR et montrent une bonne corrélation de ce test avec le vieillissement organoleptique naturel en cartons (obscurité) jusqu'à la DLUO (date limite d'utilisation optimale), également avec une exposition à la lumière atténuée d'un rayon commercial ou de chez le consommateur.

En pratique, un flacon est retiré chaque semaine de l'étagère et placé au congélateur pour les séances ultérieures d'évaluation sensorielle. L'évaluation sensorielle des huiles est effectuée par un panel de 6 à 7 personnes pratiquant ce type d'évaluation quotidiennement.

Pour les huiles de graines, comme par exemple l'huile de colza, les panélistes cherchent habituellement à détecter si l'huile présente ou non des défauts rédhibitoires et à partir de cette évaluation classent l'huile en "acceptable" (note sur 10 supérieure ou égale à 7,0) ou en "non acceptable" (note sur 10 inférieure à 7,0). Le mode opératoire consiste à réchauffer l'huile à 38°C ± 2°C pendant 30 minutes avant l'évaluation par les panélistes qui disposent chacun dans leur verre d'une vingtaine de grammes d'huile. La dégustation se fait dans une salle dédiée équipée de boxes isolés, éclairés par une lumière spécifique ne permettant pas de différencier les échantillons par leur couleur.

Pour les huiles des mélanges objets de l'invention ayant typiquement un goût d'huile d'olive, il a été décidé de les déguster comme une huile d'olive selon le protocole décrit dans le règlement européen n° 1989/2003. L'huile est donc classée comme "équivalent organoleptique vierge extra" si la médiane des défauts est M défauts = 0 et celle du fruité est M fruité > 0. Elle est classée "équivalent organoleptique vierge" si 0 < M défaut < 2,5 et M fruité > 0. On rappelle que les attributs définissant la qualité d'une huile d'olive vierge sont le fruité puis l'amer et le piquant.

Sur la base des tests sensoriels, on constate que l'huile des mélanges objets de l'invention peut être classée comme "équivalent organoleptique vierge-extra" même après 12 semaines de vieillissement accéléré puisque les médianes des défauts et du fruité sont conformes au règlement européen pour cette catégorie "vierge extra". De plus, on constate qu'il n'y a que peu de différence entre l'huile témoin conservée en chambre froide (5°C) à l'obscurité et l'huile soumise à ce test de vieillissement accéléré (l'examen des moyennes indique quelques défauts très mineurs non significatifs par rapport au témoin)(tableau 1).

Comparativement à l'huile des mélanges objets de l'invention, une huile de colza raffinée (100% pure) a subi le même test de vieillissement accéléré ; pour la majorité des panélistes, elle est jugée à la limite de l'acceptable en exposition lumière "nord" (très atténuée) et inacceptable en exposition lumière "ouest" (modérément intense) (note globale < 7/10 avec rejet pour la majorité des panélistes)(tableau 2).

Les tests montrent donc que la présence d'un pourcentage d'au moins environ 18% d'huile d'olive vierge-extra ou vierge, dans un mélange d'huiles de graines raffinées riche en huile de colza raffinée garantit au mélange objet de l'invention une préservation du goût original de l'huile d'olive tout au long de sa durée de vie.

Sans être liés par la théorie, on peut penser que l'huile d'olive, présente dans les mélanges objets de l'invention à des teneurs comprises entre environ 18% et environ 28%, agit principalement
- soit par protection contre l'apparition des défauts d'altération de goût des huiles riches en acide alpha-linolénique comme l'huile de colza, par la présence des polyphénols et autres composés mineurs naturellement présents dans les huiles d'olive vierge et vierge extra,
- soit par masquage de ces défauts organoleptiques par le goût propre des huiles d'olive vierge et vierge extra,
- soit par l'action combinée des deux.

**Tableau 1**

| **Test de vieillissement accéléré de la composition lipidique (Colza 58%-Olive VE 24%-Pépins de raisin 11%-Tournesol 7%) en bouteille transparente PET** | | | | | | | | | | | | | | |
|---|---|---|---|---|---|---|---|---|---|---|---|---|---|---|
| | Témoins T0S 4°C obscurité | | T6S T° Amb. LN. Ouest | | T9S T° Amb. LN. Ouest | | T12S T° Amb. LN. Ouest | | T6S T° Amb. LN. Nord | | T9S T° Amb. LN. Nord | | T12S T° Amb. LN. Nord | |
| | Médiane | Moyenne | Médiane | Moyenne | Médiane | Moyenne | Médiane | Moyenne | Médiane | Moyenne | Médiane | Moyenne | Médiane | Moyenne |
| Chômé | 0 | 0 | 0 | 0 | 0 | 0,4 | 0 | 0,2 | 0 | 0 | 0 | 0,4 | 0 | 0,1 |
| Moisi | 0 | 0,3 | 0 | 0 | 0 | 0,4 | 0 | 0,3 | 0 | 0 | 0 | 0 | 0 | 0,8 |
| Lies | 0 | 0 | 0 | 0 | 0 | 0 | 0 | 0 | 0 | 0 | 0 | 0 | 0 | 0 |
| Vineux - Vinaigre Acide - Aigre | 0 | 0 | 0 | 0 | 0 | 0 | 0 | 0 | 0 | 0 | 0 | 0 | 0 | 0 |
| Métallique | 0 | 0 | 0 | 0 | 0 | 0 | 0 | 0 | 0 | 0 | 0 | 0 | 0 | 0 |
| Rance | 0 | 0 | 0 | 0 | 0 | 0 | 0 | 0 | 0 | 0 | 0 | 0 | 0 | 0 |
| Autre | 0 | 0 | 0 | 0 | 0 | 0,4 | 0 | 0 | 0 | 0 | 0 | 0 | 0 | 0 |
| Fruité | 3,8 | 3,5 | 3,2 | 3,4 | 4,6 | 4,2 | 3,7 | 3,3 | 3,4 | 3,4 | 3,8 | 3,8 | 3,85 | 4 |
| Amer | 2 | 2 | 1 | 1,2 | 1,8 | 2,1 | 1,3 | 1,3 | 1,4 | 1,4 | 1,6 | 1,4 | 1,15 | 1,4 |
| Piquant | 2 | 1,7 | 1,2 | 1,4 | 1,4 | 1,4 | 1,3 | 1,5 | 0 | 0,6 | 0,6 | 0,5 | 1 | 1,1 |

| | | | | | | | | | | | | | | |
|---|---|---|---|---|---|---|---|---|---|---|---|---|---|---|
| T= temps S=semaines LN=lumiète naturelle T°Amb= température ambiante notes sur 10 (moyennes et médianes) | | | | | | | | | | | | | | |

**Tableau 2**

| **Test de vieillissement accéléré d'une huile de colza raffinée (100% pure) en bouteille transparente PET** | | | | | |
|---|---|---|---|---|---|
| | Témoins T0S | T6S T° Amb. | T10S T° Amb. | T6S T° Amb. | T10S T° Amb. |
| | 4°C obscurité | LN. ouest | LN. ouest | LN. nord | LN. nord |
| Fruité | 2,5 | 3,5 | 4,5 | 3 | 3,5 |
| Verdure | 0,6 | 0,8 | 1 | 0,5 | 1 |
| Plastique | 0 | 0,5 | 0 | 0,5 | 0 |
| Rance | 0 | 0,1 | 3 | 0 | 0,5 |
| Poisson . | 0 | 0,9 | 2,5 | 0,3 | 0,5 |
| Brûlé | 0 | 0 | 0 | 0 | 0 |
| "non identifié" | 0,8 | 1,4 | 1 | 1 | 0,5 |
| Note moyenne | 7,7 | 6,3 | 6,1 | 7,1 | 7 |
| Nombres notes < 7 | 0/6 | 6/6 | 4/5 | 3/6 | 2/5 |

| | | | | | |
|---|---|---|---|---|---|
| T= temps S=semaines LN=lumière naturelle T°Amb= température ambiante notes sur 10 (moyennes et médianes) | | | | | |

### Exemple 25

### Test d'usage ménage (tableaux 3 à 5)

En complément du test accéléré, un test d'usage ménager est effectué afin d'évaluer dans quelle mesure l'ouverture périodique de la bouteille lors de son usage prolongé par le consommateur peut provoquer une détérioration organoleptique de l'huile par entrée d'air, donc d'oxygène, dans la bouteille.

Les compositions lipidiques définies ci-dessus sont conditionnées en bouteilles en PET transparentes comme dans l'exemple précédent du test accéléré. On pré-conserve d'abord les bouteilles sur étagères, à la lumière "ouest" (modérément intense) à température ambiante dans les mêmes conditions que dans le test accéléré, en les y entreposant pendant 3 ou 6 mois. Les bouteilles sont ensuite ouvertes trois fois par semaine, pendant 12 semaines, pour en retirer chaque fois 20 ml d'huile puis refermées. Ces conditions se rapprochent bien des circonstances d'usage chez un consommateur. L'huile peut subir ainsi une dégradation oxydative progressive, accrue par rapport au test accéléré simple, du fait que l'espace résiduel au dessus de l'huile est d'une part renouvelé à chaque ouverture, d'autre part augmenté en volume de façon concomitante.

Au bout de 12 semaines de prélèvements, un test d'évaluation sensorielle est réalisé, avec les mêmes panélistes que dans l'exemple précédent.

Ce test est sévère puisqu'à 12 semaines près de seulement le quart de la bouteille reste rempli. Pourtant dans le cas de l'huile du mélange objet de l'invention, soumise au test d'usage ménager après 3 mois ou 6 mois de pré-conservation en lumière "ouest" (modérément intense), le fruité de l'huile d'olive reste caractéristique, malgré l'apparition de quelques défauts mineurs, différents en nature et intensité de ceux habituellement perçus avec une huile de colza (tableaux 3 et 4).

Les médianes des défauts sont bien inférieures à 2,5 ce qui permet de classer l'huile du mélange objet de l'invention comme une huile "équivalent organoleptique vierge", même après 6 mois de pré-conservation à température ambiante à la lumière "ouest" (modérément intense) avant la réalisation du test d'usage ménager.

Au contraire, une huile de colza raffinée (100% pure) soumise au même test d'usage ménager ne tient pas organoleptiquement plus de 5 à 7 semaines : pourtant exposée seulement une semaine en lumière "nord" (très atténuée), moins sévère que la lumière "ouest" (modérément intense), l'huile de colza atteint rapidement la limite de l'acceptable, bien avant la limite des 12 semaines du test d'usage ménager (tableau 5).

**Tableau 3**

| **Test d'usage ménager de la composition lipidique (Colza 58%-Olive VE 24%-Pépins de raisin 11%-Tournesol 7%) en bouteille transparente PET après pré-conservation de 3 mois (température ambiante et lumière naturelle "Ouest")** | | | | | | | | |
|---|---|---|---|---|---|---|---|---|
| | Témoins T0S 4°C obscurité | | T° Amb. LN. Ouest T4S | | T° Amb. LN. Ouest T8S | | T° Amb. LN. Ouest T12S | |
| | Médiane | Moyenne | Médiane | Moyenne | Médiane | Moyenne | Médiane | Moyenne |
| Chômé | 0 | 0 | 0 | 0 | 0 | 0,7 | 0 | 0 |
| Moisi | 0 | 0,2 | 0 | 0 | 0 | 0 | 0 | 0,5 |
| Lies | 0 | 0 | 0 | 0 | 0 | 0 | 0 | 0 |
| Vineux - Vinaigre Acide - Aigre | 0 | 0 | 0 | 0 | 0 | 0 | 0 | 0 |
| Métallique | 0 | 0 | 0 | 0 | 0 | 0 | 0 | 0 |
| Rance | 0 | 0,1 | 0 | 0,2 | 0,4 | 1,0 | 0,9 | 0,8 |
| Autre | 0 | 0,1 | 0 | 0,6 | 1,0 | 1,2 | 0,7 | 0,9 |
| Fruité | 2,8 | 3,0 | 2,2 | 2,0 | 1,8 | 2,3 | 1,7 | 1,7 |
| Amer | 0,9 | 1,1 | 0,2 | 0,6 | 0,4 | 0,9 | 0,2 | 0,5 |
| Piquant | 1,1 | 1,0 | 0 | 0,4 | 0 | 1,0 | 0,3 | 0,5 |

| | | | | | | | | |
|---|---|---|---|---|---|---|---|---|
| T= temps S=semaines LN=lumière naturelle T°Amb= température ambiante notes sur 10 (moyennes et médianes) | | | | | | | | |

**Tableau 4**

| **Test d'usage ménager de la composition lipidique (Colza 58%-Olive VE 24%-Pépins de raisin 11%-Tournesol 7%) en bouteille transparente PET après pré-conservation de 6 mois (température ambiante et lumière naturelle "Ouest")** | | | | | | | | |
|---|---|---|---|---|---|---|---|---|
| | Témoins T0S 4°C obscurité | | T° Amb. LN. Ouest T4S | | T° Amb. LN. Ouest T8S | | T° Amb. LN. Ouest T12S | |
| | Médiane | Moyenne | Médiane | Moyenne | Médiane Moyenne | | Médiane | Moyenne |
| Chômé | 0 | 0 | 0 | 0 | 0 | 0 | 0 | 0 |
| Moisi | 0 | 0,2 | 0,1 | 0,2 | 0 | 0,5 | 0 | 0,4 |
| Lies | 0 | 0 | 0 | 0 | 0 | 0 | 0 | 0 |
| Vineux - Vinaigre Acide - Aigre | 0 | 0 | 0 | 0 | 0 | 0 | 0 | 0 |
| Métallique | 0 | 0 | 0 | 0 | 0 | 0 | 0 | 0 |
| Rance | 0 | 0,1 | 0 | 0,3 | 0 | 0,5 | 0 | 0,5 |
| Autre | 0 | 0,1 | 0,4 | 0,8 | 0,9 | 0,9 | 0 | 0,7 |
| Fruité | 2,8 | 3,0 | 2,1 | 2,2 | 2,2 | 2,2 | 2,4 | 2,4 |
| Amer | 0,9 | 1,1 | 0,7 | 0,6 | 0,8 | 0,8 | 0,5 | 0,7 |
| Piquant | 1,1 | 1,0 | 0,4 | 0,6 | 0,8 | 0,8 | 0,6 | 0,8 |

| | | | | | | | | |
|---|---|---|---|---|---|---|---|---|
| T= temps S=semaines LN=lumière naturelle T°Amb= température ambiante notes sur 10 (moyennes et médianes) | | | | | | | | |

**Tableau 5**

| **Test d'usage ménager d'une huile de colza raffinée (100% pure) en bouteille transparente PET après pré-conservation de 1 semaine (température ambiante et lumière naturelle "Nord")** | | | | |
|---|---|---|---|---|
| | température ambiante - LN nord | | | |
| | Témoin + 4°C obscurité | T 4S | T 8S | T 12S |
| Note/10 | 7,85 | 7,2 | 6,7 | 6,9 |
| Nombre de notes < 7 | 0/6 | 2/6 | 3/6 | 3/6 |

| | | | | |
|---|---|---|---|---|
| T = temps S = semaines LN = lumière naturelle T°Amb = température ambiante notes sur 10 (moyennes) | | | | |

### Exemple 26

### Test de conservation de longue durée (tableaux 6 et 7)

Une quantité de 150 kg d'une composition voisine de l'exemple 1 (colza 58%, olive 26%, pépins de raisin 11%, tournesol 5%) a été préparée à l'échelle pilote laboratoire. Les huiles destinées à la composition ont été acheminées depuis les cuves de stockage de l'usine au Laboratoire Pilote en fûts métalliques de 200 kg. Elles ont été transférées dans une cuve inox de 220 litres, à l'aide d'une pompe vide-fûts "Flux" à vitesse variable (corps F430SL, moteur F417EL, Société FLUX-Geräte Gmbh, Maulbronn, Allemagne) après pesage des fûts sur un transpalette-peseur "Ravas RPW4100" à jauge de contrainte (Société Ravas Mobile Weighing, Zaltbommel, Pays-Bas). Le mélange a été préparé sous agitation modérée via un mélangeur axial à pales "Rayneri" (Société VMI, Montaigu, France) à environ 400 t/min pendant une durée d'environ 1 heure.

L'examen de la composition chromatographique des acides gras de la composition a permis de vérifier que le mélange était parfait et correspondait à la composition attendue (tableaux 6 et 7).

L'huile de la composition a été transférée dans des bouteilles de PET (polyéthylène téréphtalate) transparentes de 1 litre (bouteilles industrielles ISIO4) via un doseur automatique "Stoppil-Super" muni d'un arrêt manuel (Société Stoppil SA, Marne-la-Vallée, France). Le bouchage a été effectué manuellement à l'aide de bouchons industriels ISIO4. Les bouteilles ont été mises par 15 dans des cartons fermés et conservés dans une pièce de bureau à température ambiante (21-24°C).

La dégustation de l'huile de la composition après 15 et 22 mois n'a pas permis de détecter des défauts de goût ou d'arrière-goût. Le fruité de l'huile d'olive était bien conservé, permettant d'assimiler le produit âgé de 15 et 22 mois à une huile "équivalent organoleptique vierge".

**TABLEAU 6**

| **COMPOSITION EN ACIDES GRAS DE L'ESSAI PILOTE** | | | |
|---|---|---|---|
| | | | **Préparation Pilote** **150 kg** **Etude Conservation** |
| **Acides** | | | |
| Myristique | C14 : 0 | | 0,04 |
| Myristoléique | C14 : 1 | | |
| Palmitique | C16 : 0 | | 6,47 |
| Palmitoléique | C16 : 1 | | 0,33 |
| Heptadecanoïque | C17 : 0 | | 0,06 |
| Heptadecenoïque | C17 : 1 | | 0,08 |
| Stéarique | C18 : 0 | | 2,40 |
| Oléique | C18 : 1 | Trans | |
| | | Cis | 58,41 |
| Linoléique | C18 : 2 | Trans | 0,20 |
| | | Cis | 23,77 |
| Linolénique | C18 : 3 | Trans | 0,44 |
| | | Cis | 5,02 |
| Arachidique | C20 : 0 | | 0,47 |
| Gadoléique | C20 : 1 | | 0,88 |
| Eicosadienoïque | C20 : 2 | | 0,05 |
| Béhénique | C22 : 0 | | 0,27 |
| Erucique | C22 : 1 | | 0,14 |
| Lignocérique | C24 : 0 | | 0,12 |
| Sélacholéique | C24 : 1 | | 0,12 |
| | C26 : 0 | | 0,06 |
| | | | |
| Non identifiés | | | 0,67 |
| | | | |

| **TENEUR EN TOCOPHEROLS DE L'ESSAI PILOTE** | | | |
|---|---|---|---|
| Tocophérols totaux (mg/100 g) | | | 42,5 |
| α-tocophérol (%) | | | 53,2 |
| γ-tocophérol (%) | | | 45,2 |
| δ-tocophérol (%) | | | 1,6 |

**TABLEAU 7**

| **RATIOS DE L'ESSAI PILOTE** | |
|---|---|
| | **Préparation Pilote** **150 kg** **Etude Conservation** |
| | |
| | |
| Rapport LA / ALA | 4,4 |
| Rapport OL / LA | 2,4 |
| Rapport mono / polyinsaturés | 2,0 |
| Rapport α-tocophérol / γ-tocophérol | 1,2 |

### Exemple 27 (tableau 8)

Sur l'huile composée Primevère (Sté CEMA/Primalliance, 59-FR) commercialisée en France entre 2001 et 2003 et précédemment mentionnée pour contenir de l'huile de colza en présence, entre autres, d'huiles de noix et de poisson, on a réalisé un test de vieillissement accéléré pour évaluer la durée de vie de cette huile dans le temps, comparativement à la composition lipidique revendiquée.

Il s'agit, selon les indications de l'étiquetage et des analyses chromatographiques effectuées sur ce produit, d'un mélange d'huiles dont la composition approximative serait :

| **Composition approximative de l'huile "Primevère"** | |
|---|---|
| **Huile** | % en poids |
| Huile de colza | 65,0 |
| Huile d'olive | 6,0 |
| Huile de noix | 12,0 |
| Huile de pépins de raisin | 12,0 |
| Huile de germe de blé | 3,0 |
| Huile de poisson | 2,0 |

| **Composition en acides gras** | g pour 100g | g par CAS | % ANC |
|---|---|---|---|
| Acides gras saturés | 8,9 | 0,9 | |
| Acides gras monoinsaturés | 50,6 | 5,0 | |
| Acides gras polyinsaturés | 39,8 | 4,0 | |
| | | | |
| Acide oléique | 48,8 | 4,9 | |
| Acide linoléique | 31,8 | 3,2 | 32 |
| Acide α-linolénique | 7,8 | 0,8 | 38 |

| | mg pour 100 g | mg par CAS | % ANC |
|---|---|---|---|
| α-tocophérol (vitamine E) | 26 | 2,6 | 22 |

| | |
|---|---|
| Rapport LA/ALA | 4,1 |
| Rapport OL/LA | 1,5 |
| Rapport mono/polyinsaturés | 1,3 |

Cette huile Primevère a été testée dans sa bouteille PET (polyéthylène téréphtalate) transparente d'origine de 500 ml avec étiquette, en test de vieillissement accéléré durant 3, 6 et 9 semaines à température ambiante avec parallèlement une exposition à la lumière naturelle "Ouest" (modérément intense) et une exposition à la lumière naturelle "Nord" (très atténuée).

On constate qu'au bout de 9 semaines, le produit se conserve correctement à l'exposition "Nord" (très atténuée), mais qu'en revanche il ne supporte pas l'exposition à température ambiante à la lumière "ouest" (modérément intense), la majorité des panélistes jugeant le produit inacceptable (notes inférieures à 6,0)(tableau 8).

L'exemple précédent de test accéléré montre qu'au contraire la composition objet de l'invention se conserve sans altération organoleptique, à température ambiante et à la lumière naturelle "ouest" (modérément intense) pendant plus de 12 semaines. Le test d'usage ménager indique de surcroît que la composition revendiquée résiste après 36 semaines (6 mois + 12 semaines) sans défaut majeur.

**Tableau 8**

| **Test de vieillissement accéléré de l'huile composée Primevère dans sa bouteille transparente 500 ml PET (avec étiquette)** | | | | | | | |
|---|---|---|---|---|---|---|---|
| | Témoins T0S 4°C obscurité | T 3S T° Amb. | | T 6S T° Amb | | T 9S T° Amb | |
| | | LN. Nord | LN. Ouest | LN. Nord | LN. Ouest | LN. Nord | LN. Ouest |
| Note moyenne | 7,3 | 7,5 | 7,8 | 7,7 | 7,2 | 7,5 | 5,8 |
| Note médiane | 7,5 | 7,5 | 8,0 | 7,8 | 7,5 | 7,5 | 5,8 |
| Nombres notes <7 | 2/6 | 0/6 | 0/6 | 0/6 | 2/6 | 0/6 | 4/6 |

| | | | | | | | |
|---|---|---|---|---|---|---|---|
| T = temps S = semaines LN = lumière naturelle T°Amb = température ambiante notes sur 10 (moyennes et médianes) | | | | | | | |

### Exemple 28 (tableaux 9 et 10)

L'exemple décrit ci-après montre que l'administration de la composition lipidique de composition proche de celle de l'exemple 1 (58% d'huile de colza, 25% d'huile d'olive, 11% d'huile de pépins de raisin et 6% d'huile de tournesol) à des hommes adultes sains pendant 4 mois à raison d'environ 30 g par jour provoque un enrichissement significatif en acide alpha-linolénique (précurseur de la famille ω3) et en EPA (acide eicosapentaénoïque de la famille ω3 qui dérive du précédent) dans les phospholipides (PL) et les esters de cholestérol (CE) plasmatiques avec une diminution du rapport ω6/ω3 des acides gras correspondants de ces fractions plasmatiques.

Une quantité de 600 litres de la composition ci-dessus a été préparée au laboratoire pilote dans une cuve agitée de 650 litres selon la même méthodologie que précédemment et conditionnée en bidons de PEHD (polyéthylène haute densité) alimentaire de 5 litres destinés à l'étude nutritionnelle (composition en acides gras tableaux 9 et 10).

L'étude clinique, promue par Lesieur et validée par les Autorités de Santé (CCPPRB/DGS), a été réalisée sur une population d'une vingtaine de volontaires mâles, indemnes de maladies métaboliques, âgés de 25 à 75 ans, avec IMC (indice de masse corporelle) inférieur à 27 kg/m² et bilan lipidique normal, choisis au sein d'une communauté religieuse, de façon à pouvoir contrôler la conformité alimentaire (compliance) au régime proposé.

L'huile de la composition en bidons de 5 litres était fournie aux cuisiniers de la communauté et on a pu vérifier que l'apport quotidien moyen avoisinait environ 30 g d'huile/j par individu. L'étude s'est déroulée sur une période de 4 mois au bout de laquelle un prélèvement sanguin a permis d'analyser la composition en acides gras des fractions lipidiques du plasma, comparativement à un régime de 4 mois réalisé sur la même population avec l'huile ISIO4 (les sujets étant leurs propres témoins), les deux régimes étant séparés par une période d'alimentation normale ("wash-out").

L'alimentation quotidienne apportait au total 95 g de lipides, soit 34% de l'apport énergétique total, avec un rapport linoléique/alpha-linolénique (LA/ALA) de 11,8 pour le régime ISIO4 et de 5,4 pour le régime de la composition revendiquée.

Les 30 g de la composition lipidique apportaient quotidiennement environ 1,6 g d'acide alpha-linolénique, 8,0 g d'acide linoléique et 17,2 g d'acide oléique.

Les 30 g d'huile ISIO4 apportaient quotidiennement environ 0,6 g d'acide alpha-linolénique, 12,9 g d'acide linoléique et 13,5 g d'acide oléique.

L'analyse de la composition en acides gras des fractions lipidiques PL et CE du plasma (PL = phospholipides et CE = esters de cholestérol) a permis de mesurer l'intérêt de la consommation de la composition revendiquée (contenant 5,4% d'acide alpha-linolénique) par rapport à l'huile de référence ISIO4 (ne contenant que 1,9% d'acide alpha-linolénique).

Dans la fraction PL, l'acide alpha-linolénique est passé de 0,16% pour ISIO4 à -0,25% pour la composition de l'invention et surtout l'EPA (acide eicosapentaénoïque de la famille ω3) est passé de 0,80% pour ISIO4 à 1,14% pour la composition de l'invention (soit+42% d'augmentation).

Dans la fraction CE, l'acide alpha-linolénique est passé de 0,51% pour ISIO4 à 0,81% pour la composition de l'invention. La consommation d'environ 30 g par jour de la composition revendiquée permet donc non seulement de dépasser aisément le seuil de carence en alpha-linolénique (moins de 0,3% dans les CE) mais aussi d'atteindre le seuil de protection reconnu contre les maladies cardiovasculaires (au moins 0,6% dans les CE).

Dans cette même fraction CE, l'EPA est avantageusement passé de 0,93% pour ISIO4 à 1,24% pour la composition de l'invention (soit +33% d'augmentation). Cette synthèse nette d'EPA par l'organisme à partir d'acide alpha-linolénique alimentaire montre bien qu'il n'est pas indispensable de fournir cet acide gras ω3 supérieur à l'individu sain dans la composition lipidique, puisqu'il peut le synthétiser lui-même naturellement à partir de l'acide alpha-linolénique.

On observe également que le rapport (ω6 totaux plasmatiques)/(ω3 totaux plasmatiques) a décru dans la fraction PL de respectivement 6,3 à 5,1 et dans la fraction CE de 29,9 à 21,8, montrant ainsi que la consommation d'environ 30 g par jour de la composition revendiquée permet d'améliorer à la baisse la proportion entre les deux familles d'acides gras ω6 et ω6 dans ces fractions lipidiques sanguines.

Enfin, le rapport ARA/EPA (acide arachidonique C20:4 ω6/acide EPA C20:5 ω3) diminue dans les PL de 10,7 pour ISIO4 à 7,8 pour la composition revendiquée, et dans les CE également respectivement de 6,4 pour ISIO4 à 5,3 pour la composition de l'invention. Cela signifie que la consommation de la composition revendiquée est susceptible d'entraîner une contrebalance accrue par l'EPA (ω3) de certains effets négatifs (proaggrégants, proinflammatoires) liés à un excès d'acide arachidonique (ω6).

**TABLEAU 9**

| **COMPOSITION EN ACIDES GRAS DE L'ESSAI PILOTE NUTRITION** | | | |
|---|---|---|---|
| | | | **Préparation Pilote** **600 litres** **Etude Nutrition** |
| **Acides** | | | |
| Myristique | C14 : 0 | | 0,04 |
| Myristoléique | C14 : 1 | | |
| Palmitique | C16 : 0 | | 6,41 |
| Palmitoléique | C16 : 1 | | 0,32 |
| Heptadecanoïque | C17 : 0 | | 0,06 |
| Heptadecenoïque | C17 : 1 | | 0,08 |
| Stéarique | C18 : 0 | | 2,43 |
| Oléique | C18 : 1 | Trans | |
| | | Cis | 57,84 |
| Linoléique | C18 : 2 | Trans | 0,21 |
| | | Cis | 24,35 |
| Linolénique | C18 : 3 | Trans | 0,44 |
| | | Cis | 4,96 |
| Arachidique | C20 : 0 | | 0,48 |
| Gadoléique | C20 : 1 | | 0,89 |
| Eicosadienoïque | C20 : 2 | | 0,05 |
| Béhénique | C22 : 0 | | 0,28 |
| Erucique | C22 : 1 | | 0,15 |
| Lignocérique | C24 : 0 | | 0,13 |
| Sélacholéique | C24 : 1 | | 0,14 |
| | C26 : 0 | | 0,06 |
| | | | |
| Non identifiés | | | 0,68 |
| | | | |

| **TENEUR EN TOCOPHEROLS DE L'ESSAI PILOTE NUTRITION** | | | |
|---|---|---|---|
| Tocophérols totaux (mg/100 g) | | | 44 |
| α-tocophérol (%) | | | 52,7 |
| γ-tocophérol (%) | | | 45,8 |
| δ-tocophérol (%) | | | 1,5 |

**TABLEAU 10**

| **RATIOS DE L'ESSAI PILOTE NUTRITION** | |
|---|---|
| | **Préparation Pilote** **600 litres** **Etude Nutrition** |
| | |
| | |
| Rapport LA / ALA | 4,6 |
| Rapport OL / LA | 2,4 |
| Rapport mono / polyinsaturés | 2,0 |
| Rapport α-tocophérol / γ-tocophérol | 1,2 |

## Revendications

1. Composition lipidique contenant plus de 99%, et de préférence environ 99,9%, de lipides d'origine végétale, comprenant :
- environ 45 à environ 67%, de préférence environ 47 à environ 63% en poids d'huile de colza,
- au moins 18%, et notamment d'environ 18 à environ 28%, et de préférence d'environ ²20 à environ 27% en poids d'huile d'olive, qui protège contre l'altération organoleptique de l'huile de colza au cours du temps, et
- environ 11 à environ 24%, et de préférence d'environ 16 à environ 21% en poids d'au moins une huile végétale contenant d'une part d'environ 50 à environ 80% en poids d'acide linoléique et d'autre part d'environ 20 à environ 200 mg/100 g d'α-tocophérol, de telle sorte que la composition lipidique comprend d'environ 20 à environ 35 mg/100 g, et de préférence d'environ 21 à environ 29 mg/100 g en poids d'α-tocophérol,
ladite composition lipidique présentant les propriétés suivantes :
* elle se conserve à température ambiante à la lumière naturelle en intérieur pendant 12 semaines de tests accélérés sans altération organoleptique,
* sa date limite d'utilisation optimale (DLUO) est d'au moins 22 mois à température ambiante, à l'abri de la lumière,
* elle présente un rapport en poids acide oléique/acide linoléique (OL/LA) (ω9/ω6) variant de 1,9 à 2,8,
* elle présente un rapport en poids acide linoléique/acide alpha-linolénique (LA/ALA) (ω6/ω3) variant de 3 à 6, et de préférence de 3,8 à 5,5,
* elle ne comprend pas d'acides gras polyinsaturés ω6 présentant un degré d'insaturation de 3,
* elle ne comprend pas d'acides gras polyinsaturés ω3 et ω6 présentant un degré d'insaturation supérieur à 3,
* elle est dépourvue d'huile réputée à potentiel allergénique, et
* elle est dépourvue d'huile provenant d'organismes marins.

2. Composition lipidique selon la revendication 1, **caractérisée en ce que** les acides gras ω3 de ladite composition lipidique présentent un degré d'insaturation maximal de 3 et **en ce que** les acides gras ω6 de ladite composition lipidique présentent un degré d'insaturation maximal de 2.

3. Composition lipidique selon la revendication 1 ou 2, **caractérisée en ce qu'**elle est dépourvue d'acides gras polyinsaturés à chaînes longues, à savoir des acides gras ayant un degré d'insaturation strictement supérieur à 3, et notamment **en ce qu'**elle est dépourvue, dans la famille ω3, d'acide eicosapentaénoïque (EPA), d'acide docosapentaénoïque (DPA) et d'acide docosahexaénoïque (DHA,) (C22:6 n-3).

4. Composition lipidique selon l'une des revendications 1 à 3, **caractérisée en ce qu'**elle comprend :
- d'environ 9 à environ 11%, et de préférence environ 10% en poids d'acides gras saturés,
- d'environ 54 à environ 65%, de préférence d'environ 55 à environ 60%, et encore de préférence d'environ 57 à environ 60% en poids d'acides gras monoinsaturés, et
- d'environ 25 à environ 35%, et de préférence environ 29 à environ 33% en poids d'acides gras polyinsaturés.

5. Composition lipidique selon l'une quelconque des revendications 1 à 4, **caractérisée en ce qu'**elle comprend d'environ 53 à environ 61%, et de préférence d'environ 55 à environ 59% en poids d'acide monoinsaturé oléique (ω9).

6. Composition lipidique selon l'une quelconque des revendications 1 à 5, **caractérisée en ce qu'**elle comprend d'environ 21 à environ 29%, et de préférence d'environ 23 à environ 28% en poids d'acide polyinsaturé linoléique (ω6).

7. Composition lipidique selon l'une quelconque des revendications 1 à 6, **caractérisée en ce qu'**elle comprend d'environ 4,5 à environ 6,5%, et de préférence d'environ 5,0 à environ 5,5% en poids d'acide polyinsaturé alpha-linolénique (ω3).

8. Composition lipidique selon l'une quelconque des revendications 1 à 7, **caractérisée en ce que** le rapport en poids entre les acides gras monoinsaturés et les acides gras polyinsaturés varie d'environ 1,5 à environ 2,7, et de préférence d'environ 1,6 à environ 2,3.

9. Composition lipidique selon l'une quelconque des revendications 1 à 8, **caractérisée en ce qu'**elle présente un rapport en poids entre les acides gras ω6 et entre les acides gras ω3 d'environ 5.

10. Composition lipidique selon l'une quelconque des revendications 1 à 9, **caractérisée en ce qu'**elle comprend de l'huile d'olive vierge et **en ce que** les autres huiles sont des huiles raffinées.

11. Composition lipidique selon l'une quelconque des revendications 1 à 10, **caractérisée en ce qu'**elle comprend d'environ 20 mg/100 g à environ 35 mg/100 g en poids d'α-tocophérol, et de préférence **en ce qu'**elle comprend d'environ 21 mg/100 g à environ 29 mg/100 g en poids d'α-tocophérol.

12. Composition lipidique selon l'une quelconque des revendications 1 à 11, **caractérisée en ce que** le rapport en poids entre l'α-tocophérol et le γ-tocophérol varie d'environ 1,0 à environ 2,0, et de préférence d'environ 1,1 à environ 1,8.

13. Composition lipidique selon la revendication 11 ou 12, **caractérisée en ce que** l'α-tocophérol est de l'α-tocophérol naturel.

14. Composition lipidique selon l'une quelconque des revendications 1 à 11, **caractérisée en ce qu'**elle contient un supplément d'α-tocophérol et/ou d'acétate d'α-tocophérol permettant d'obtenir une teneur finale en α-tocophérol au maximum d'environ 100 mg/100g de composition lipidique.

15. Composition lipidique selon l'une quelconque des revendications 1 à 14, **caractérisée en ce qu'**elle est exempte d'huile réputée à potentiel allergénique comme l'huile d'arachide, l'huile de noix, l'huile de noisette ou l'huile de sésame.

16. Composition lipidique selon l'une quelconque des revendications 1 à 15, **caractérisée en ce qu'**elle est exempte d'huile d'organismes marins, notamment de poissons.

17. Composition lipidique selon l'une quelconque des revendications 1 à 16, **caractérisée en ce que** l'huile d'olive, qui protège contre la-modification organoleptique de l'huile de colza au cours du temps, est de l'huile d'olive "vierge extra" ou de l'huile d'olive "vierge" ou de l'huile d'olive "composée d'huiles d'olive raffinées et d'huiles d'olive vierges".

18. Composition lipidique selon l'une quelconque des revendications 1 à 17, **caractérisée en ce que** l'huile végétale contenant d'une part d'environ 50 à environ 80% en poids d'acide linoléique (ω6) et d'autre part d'environ 20 à environ 200 mg/100 g d'α-tocophérol est notamment choisie parmi l'huile de tournesol, l'huile de germes de maïs, l'huile de carthame, l'huile de pépins de raisin, l'huile de germes de blé, l'huile de coton, l'huile de pépins de pomme.

19. Composition lipidique selon l'une quelconque des revendications 1 à 18, **caractérisée en ce qu'**elle comprend également d'environ 4 à environ 24%, de préférence d'environ 5 à environ 19% en poids d'huile de tournesol.

20. Composition lipidique selon l'une quelconque des revendications 1 à 19, **caractérisée en ce qu'**elle comprend également d'environ 1% à environ 23%, de préférence d'environ 5 à environ 13% en poids d'huile de pépins de raisin.

21. Composition lipidique selon la revendication 20, **caractérisée en ce qu'**elle comprend également d'environ 4 à environ 10%, de préférence d'environ 5 à environ 8% en poids d'huile de soja, l'huile de soja étant utilisée en remplacement partiel du poids sensiblement correspondant d'huile de colza.

22. Composition lipidique selon la revendication 20, **caractérisée en ce qu'**elle comprend également d'environ 0,8 à environ 3,5%, de préférence d'environ 1% à environ 3% en poids d'huile de lin, l'huile de lin étant utilisée en remplacement partiel de l'huile de colza dans un rapport de remplacement d'environ 1/7 à environ 1/10.

23. Composition lipidique selon la revendication 20, **caractérisée en ce qu'**elle comprend également d'environ 1 à environ 7%, de préférence d'environ 5% à environ 6% en poids d'huile de cameline, l'huile de cameline étant utilisée en remplacement de l'huile de colza dans un rapport de remplacement d'environ 1/4 à environ 1/6.

24. Composition lipidique selon la revendication 20, **caractérisée en ce qu'**elle comprend également d'environ 0,7 à environ 1%, de préférence environ 0,8% en poids d'huile de périlla, l'huile de périlla étant utilisée en remplacement de l'huile de colza dans un rapport de remplacement d'environ 1/6 à environ 1/9.

25. Composition lipidique selon la revendication 20, **caractérisée en ce qu'**elle comprend également d'environ 8 à environ 14%, de préférence d'environ 9 à environ 12% en poids d'huile de germes de maïs, l'huile de germes de maïs étant utilisée en remplacement de l'huile de tournesol dans un rapport de remplacement d'environ 1/1 à environ 1,3/1.

26. Composition lipidique selon la revendication 20, **caractérisée en ce qu'**elle comprend également d'environ 8 à environ 14%, de préférence d'environ 9 à environ 12% en poids d'huile de germes de maïs, l'huile de germes de maïs étant utilisée en remplacement de l'huile de pépins de raisin dans un rapport de remplacement d'environ 1,2/1 à environ 1,3/1.

27. Composition lipidique selon la revendication 20, **caractérisée en ce qu'**elle comprend également d'environ 2 à environ 13%, de préférence d'environ 4% à environ 11% en poids d'huile de carthame, l'huile de carthame étant utilisée en remplacement de l'huile de pépins de raisin dans un rapport de remplacement d'environ 0,8/1 à environ 1/1.

28. Composition lipidique selon l'une quelconque des revendications 1 à 27, **caractérisée en ce qu'**elle comprend :
- environ 0,03 à environ 0,05% d'acide gras C14:0,
- environ 5,90 à environ 6,60% d'acide gras C16:0,
- environ 0,30 à environ 0,40% d'acide gras C16:1,
- environ 0,05 à environ 0,07% d'acide gras C17:0,
- environ 0,05 à environ 0,09% d'acide gras C17:1,
- environ 2,30 à environ 2,8% d'acide gras C18:0,
- environ 53,0 à environ 61,0% d'acide gras C18:1,
- environ 21,0 à environ 29,0% d'acide gras C18:2 ω6,
- environ 4,5 à environ 6,5% d'acide gras C18:3 ω3,
- environ 0,40 à environ 0,60% d'acide gras C20:0,
- environ 0,80 à environ 1,00% d'acide gras C20:1,
- environ 0,04 à environ 0,06% d'acide gras C20:2,
- environ 0,20 à environ 0,40% d'acide gras C22:0,
- environ 0,10 à environ 0,30% d'acide gras C22:1,
- environ 0,07 à environ 0,15% d'acide gras C24:0, et
- environ 0,07 à environ 0,15% d'acide gras C24:1.

29. Composition lipidique selon l'une quelconque des revendications 1 à 28, **caractérisée en ce qu'**elle comprend :
- environ 0,04% d'acide gras C14:0,
- environ 6,29% d'acide gras C16:0,
- environ 0,34% d'acide gras C16:1,
- environ 0,06% d'acide gras C17:0,
- environ 0,08% d'acide gras C17:1,
- environ 2,61% d'acide gras C18:0,
- environ 57,20% d'acide gras C18:1,
- environ 25,44% d'acide gras C18:2 ω6,
- environ 5,40% d'acide gras C18:3 ω3,
- environ 0,48% d'acide gras C20:0,
- environ 0,87% d'acide gras C20:1,
- environ 0,05% d'acide gras C20:2,
- environ 0,30% d'acide gras C22:0,
- environ 0,15% d'acide gras C22:1,
- environ 0,08% d'acide gras C24:0, et
- environ 0,09% d'acide gras C24:1.

30. Composition lipidique selon l'une quelconque des revendications 1 à 29, **caractérisée en ce qu'**elle comprend :
- environ 22 à environ 26% d'huile d'olive, notamment d'huile d'olive vierge ou vierge extra,
- environ 53 à environ 63% d'huile de colza, notamment d'huile de colza raffinée,
- environ 5 à environ 19% d'huile de tournesol, notamment d'huile de tournesol raffinée, et
- environ 5 à environ 13% d'huile de pépins de raisin, notamment d'huile de pépins de raisin raffinée.

31. Composition lipidique selon l'une quelconque des revendications 1 à 30, **caractérisée en ce qu'**elle comprend :
- environ 24% d'huile d'olive, notamment d'huile d'olive vierge ou vierge extra,
- environ 58% d'huile de colza, notamment d'huile de colza raffinée,
- environ 7% d'huile de tournesol, notamment d'huile de tournesol raffinée, et
- environ 11% d'huile de pépins de raisin, notamment d'huile de pépins de raisin raffinée.

32. Composition lipidique selon l'une quelconque des revendications 1 à 31, **caractérisée en ce qu'**elle est dépourvue d'huile d'OGM et qu'elle comprend :
- environ 24% d'huile d'olive, notamment d'huile d'olive vierge ou vierge extra,
- environ 58% d'huile de colza raffinée d'origine française à identité préservée non OGM,
- environ 7% d'huile de tournesol, notamment d'huile de tournesol raffinée, et
- environ 11% d'huile de pépins de raisin, notamment d'huile de pépins de raisin raffinée.

33. Composition lipidique selon l'une quelconque des revendications 1 à 32, **caractérisée en ce qu'**elle comprend également de la vitamine D, notamment de la vitamine D3, à raison d'environ 10 à environ 150 µg de vitamine D par kg de composition lipidique, notamment à raison de 50 µg de vitamine D par kg de composition lipidique.

34. Composition lipidique selon l'une quelconque des revendications 1 à 33, notamment huile végétale, destinée à une utilisation comme huile d'assaisonnement, huile de cuisson, huile de friture ou huile multi-usages.

35. Composition alimentaire, notamment préparation huileuse aromatique et/ou aromatisée, contenant la composition lipidique selon l'une quelconque des revendications 1 à 33.

36. Composition alimentaire, notamment préparation condimentaire, émulsionnée ou non, à base d'huile végétale, notamment mayonnaises, mayonnaises allégées, sauces pour salades et crudités, vinaigrettes, vinaigrettes allégées, sauces culinaires, destinées à l'assaisonnement ou à l'accompagnement des plats, contenant la composition lipidique selon l'une quelconque des revendications 1 à 33.

37. Composition alimentaire, notamment compléments alimentaires tels que notamment des capsules ou gélules, contenant la composition lipidique selon l'une quelconque des revendications 1 à 33.

38. Composition alimentaire, notamment composition à base de lait et/ou dérivés laitiers, notamment crèmes, laits fermentés, yoghourts, sauces, fromages et desserts lactés, pouvant incorporer de l'huile végétale, contenant la composition lipidique selon l'une quelconque des revendications 1 à 33.

## Claims

1. Lipidic composition containing more than 99%, and preferably about 99.9%, of lipids of vegetable origin, including:
- about 45 to about 67%, preferably about 47 to about 63 weight % of colza oil,
- at least 18%, and particularly from about 18 to about 28%, and preferably from about 20 to about 27 weight % of olive oil, which protects the colza oil from organoleptic deterioration in the course of time, and
- about 11 to about 24%, and preferably from about 16 to about 21 weight % of at least one vegetable oil containing on the one hand from about 50 to about 80 weight % of linoleic acid and on the other hand from about 20 to about 200 mg/100 g of α-tocopherol, so that the lipidic composition includes from about 20 to about 35 mg/100 g, and preferably from about 21 to about 29 mg/100 g in weight of α-tocopherol, the aforementioned lipidic composition presenting the following properties:
* it is preserved in indoor environments at ambient temperature with natural lighting during 12 weeks of accelerated tests without organoleptic deterioration,
* its deadline of optimum use (best-before date) is at least of 22 months at ambient temperature, in a dark place,
* it presents a weight ratio of oleic acid/linoleic acid (OL/LA) (ω9/ω6) varying from 1.9 to 2.8,
* it presents a weight ratio of linoleic acid/α-linoleic acid (LA/ALA) (ω6/ω3) varying from 3 to 6, and preferably from 3.8 to 5.5,
* it does not include polyunsaturated fatty acids ω6 presenting a degree of unsaturation of 3,
* it does not include polyunsaturated fatty acids ω3 and ω6 presenting a degree of unsaturation superior to 3,
* it is free of considered oil with allergenic potential, and
* it is free of oil coming from marine organisms.

2. Lipidic composition according to claim 1, **characterised in that** the fatty acids ω3 of the aforesaid lipidic composition present a maximum degree of unsaturation of 3 and **in that** the fatty acids ω6 of the aforesaid lipidic composition present a maximum degree of unsaturation of 2.

3. Lipidic composition according to the claim 1 or 2, **characterized in that** it is free of long chain polyunsaturated fatty acids, namely of fatty acids having a degree of unsaturation strictly superior to 3, and particularly **in that** it is free, in the family ω3, of eicosapentaenoic acid (EPA), docosapentaenoic acid (DPA) and docosahexaenoic acid (DHA) (C22:6 n-3).

4. Lipidic composition according to one of claims 1 to 3, **characterized in that** it includes:
- from about 9 to about 11%, and preferably about 10 weight % of saturated fatty acids,
- from about 54 to about 65%, preferably from about 55 to about 60%, and still preferably from about 57 to about 60 weight % of monounsaturated fatty acids, and
- from about 25 to about 35%, and preferably about 29 to about 33 weight % of polyunsaturated fatty acids.

5. Lipidic composition according to any one of claims 1 to 4, **characterized in that** it includes from about 53 to about 61%, and preferably from about 55 to about 59 weight % of monounsaturated oleic acid (ω9).

6. Lipidic composition according to any one of claims I to 5, **characterized in that** it includes from about 21 to about 29%, and preferably from about 23 to about 28 weight % of linoleic polyunsaturated acid (ω6).

7. Lipidic composition according to any one of claims 1 to 6, **characterized in that** it includes from about 4.5 to about 6.5%, and preferably from about 5.0 to about 5.5 weight % of α-linolenic polyunsaturated acid (ω3).

8. Lipidic composition according to any one of claims 1 to 7, **characterized in that** the weight ratio of the monounsaturated fatty acids to the polyunsaturated fatty acids varies from about 1.5 to about 2.7, and preferably from about 1.6 to about 2.3.

9. Lipidic composition according to any one of claims 1 to 8, **characterized in that** it presents a weight ratio of fatty acids ω6 to fatty acids ω3 of about 5.

10. Lipidic composition according to any one of claims 1 to 9, **characterized in that** it includes virgin olive oil and **in that** other oils are refined oils.

11. Lipidic composition according to any one of claims 1 to 10, **characterized in that** it includes from about 20 mg/100 g to about 35 mg/100 g in weight of α-tocopherol, and preferably **in that** it includes from about 21 mg/100 g to about 29 mg/100 g in weight of α-tocopherol.

12. Lipidic composition according to any one of claims 1 to 11, **characterized in that** the weight ratio of α-tocopherol to γ-tocopherol varies from about 1.0 to about 2,0, and preferably from about L1to about L8.

13. Lipidic composition according to claim 11 or 12, **characterized in that** the α-tocopherol is natural α-tocopherol.

14. Lipidic composition according to any one of claims 1 to 11, **characterized in that** it contains a supplement of α-tocopherol and/or α-tocopherol acetate allowing to obtain a maximum final content of α-tocopherol of about 100 mg/100 g of lipidic composition.

15. lipidic composition according to any one of claims 1 to 14, **characterized in that** it is free of oil known for its allergenic potential as the groundnut oil, the nut oil, the hazelnut oil or the sesame oil.

16. Lipidic composition according to any one of claims 1 to 15, **characterized in that** it is free of oil of marine organism, particularly of fish.

17. Lipidic composition according to any one of claims 1 to 16, **characterized in that** the olive oil, which protects from the organoleptic modification of the colza oil in the course of time, is "extra virgin" olive oil or "virgin" olive oil or olive oil "made up of refined olive oils and virgin olive oils".

18. Lipidic composition according to any one of claims 1 to 17, **characterized in that** the vegetable oil containing on the one hand from about 50 to about 80 weight % of linoleic acid (ω6) and on the other hand from about 20 to about 200 mg/100 g of α-tocopherol is particularly selected amongst the sunflower oil, the corn germ oil, the safflower oil, the grape seed oil, the wheat germ oil, the cottonseed oil, the apple seed oil.

19. Lipidic composition according to any one of claims 1 to 18, **characterized in that** it also includes from about 4 to about 24%, preferably from about 5 to about 19 weight % of sunflower oil,

20. Lipidic composition according to any one of claims 1 to 19, **characterized in that** it also includes from about 1% to about 23%, preferably from about 5 to about 13 weight % of grape seed oil.

21. Lipidic composition according to claim 20, **characterized in that** it also includes from about 4 to about 10%, preferably from about 5 to about 8 weight % of soya oil, the soya oil being used in partial replacement of the substantially corresponding weight of colza oil.

22. Lipidic composition according to claim 20, **characterized in that** it also includes from about 0.8 to about 3.5%, preferably from about 1% to about 3 weight % of linseed oil, the linseed oil being used in partial replacement of the colza oil in a ratio of replacement from about 1/7 to about 1/10.

23. Lipidic composition according to claim 20, **characterized in that** it also includes from about 1 to about 7%, preferably from about 5% to about 6 weight % of dodder oil, the dodder oil being used to replace the colza oil in a ratio of replacement from about 1/4 to about 1/6.

24. lipidic composition according to claim 20, **characterized in that** it also includes from about 0.7 to about 1%, preferably about 0.8 weight % of perilla oil, the perilla oil being used to replace the colza oil in a ratio of replacement from about 1/6 to about 1/9.

25. Lipidic composition according to claim 20, **characterised in that** it also includes from about 8 to about 14%, preferably from about 9 to about 12 weight % of corn germ oil, the corn germ oil being used to replace the sunflower oil in a ratio of replacement from about 1.2/1 to about 1.3/1.

26. Lipidic composition according to claim 20, **characterised in that** it also includes from about 8 to about 14%, preferably from about 9 to about 12 weight % of corn germ oil, the corn germ oil being used to replace the grape seed oil in a ratio of replacement from about 1.2/1 to about 1.3/1.

27. Lipidic composition according to claim 20, **characterized in that** it also includes from about 2 to about 13%, preferably from about 4% to about 11 weight % of safflower oil, the safflower oil being used to replace the grape seed oil in a ratio of replacement from about 0.8/1 to about 1/1.

28. Lipidic composition according to any one of claims 1 to 27, **characterized in that** it includes:
- about 0.03 to about 0,05% of C14:0 fatty acid,
- about 5.90 to about 6.60% of C16:0 fatty acid,
- about 0-30 to about 0.40% of C16:1 fatty acid,
- about 0.05 to about 0.07% of C17:0 fatty acid.
- about 0.05 to about 0.09% of C17:1 fatty acid,
- about 2.30 to about 2.8% of C18:0 tatty acid,
- about 53.0 to about 61.0% of C18:1 fatty acid,
- about 21.0 to about 29.0% of C18:2 ω6 fatty acid,
- about 4.5 to about 6.5% of C18:3 ω3 fatty acid,
- about 0.40 to about 0.60% of C20:0 fatty acid,
- about 0.80 to about 1.00% of C20:1 fatty acid,
- about 0.04 to about 0.06% of C20:2 fatty acid,
- about 0.20 to about 0.40% of C22:0 fatty acid.
- about 0.10 to about 0.30% of C22:1 fatty acid,
- about 0.07 to about 0.15% of C24:0 fatty acid, and
- about 0.07 to about 0.15% of C24:1 fatty acid.

29. Lipidic composition according to any one of claims I to 28, **characterized in that** it includes:
- about 0,04% of C 14:0 fatty acid,
- about 6.29% of C 16:0 fatty acid,
- about 0.34% of C16:1 fatty acid,
- about 0.06% of C17:0 fatty acid,
- about 0,08% of C17:1 fatty acid,
- about 2.61% of C18:0 fatty acid,
- about 57.20% of C18: fatty acid,
- about 25.44% of C18:2 ω6 fatty acid,
- about 5.40% of C18:3 ω3 fatty acid,
- about 0.48% of C20:0 fatty acid,
- about 0-87% of C20:1 fatty acid,
- about 0.05% of C20:2 fatty acid,
- about 0.30% of C22:0 fatty acid,
- about 0.15% of C22:1 fatty acid,
- about 0.08% of C24:0 fatty acid, and
- about 0.09% of C24:1 fatty acid.

30. Lipidic composition according to any one of claims 1 to 29, **characterized in that** it includes:
- about 22 to about 26% of olive oil, particularly of virgin olive oil or extra virgin olive oil,
- about 53 to about 63% of colza oil, particularly of refined colza oil,
- about 5 to about 19% sunflower oil, particularly of refined sunflower oil, and
- about 5 to about 13% of grape seed oil, particularly of refined grape seed oil.

31. Lipidic composition according to any one of claims 1 to 30, **characterized in that** it includes:
- about 24% of olive oil, particularly of virgin olive oil or extra virgin olive oil,
- about 58% of colza oil, particularly of refined colza oil,
- about 7% of sunflower oil, particularly of refined sunflower oil, and
- about 11% of grape seed oil, particularly of refined grape seed oil.

32. Lipidic composition according to any one of claims 1to 31, **characterized in that** it is free of GMO oil and **in that** it includes:
- about 24% of olive oil, particularly of virgin olive oil or extra virgin olive oil,
- about 58% of colza oil of French origin with identity-preserved, free of GMO,
- about 7% of sunflower oil, particularly of refined sunflower oil, and
- about 11% of grape seed oil, particularly of refined grape seed oil.

33. Lipidic composition according to any one of claims 1 to 32, **characterized in that** it also includes vitamin D, particularly the vitamin D3, in a quantity from about 10 to 150 µg of vitamin D per kg of lipidic composition, particularly in a quantity of 50 µg of vitamin D per kg of lipidic composition.

34. Lipidic composition according to any one of claims 1 to 33, particularly vegetable oil, intended for use as a seasoning oil, a cooking oil, a frying oil or multi-use oils.

35. Food composition, particularly aromatic and/or aromatized oily preparation, containing the lipidic composition according to any one of claims 1 to 33.

36. Food composition, particularly condiment preparation, emulsified or not, containing vegetable oil, particularly mayonnaises, reduced mayonnaises, sauces for salads and crudenesses, vinaigrettes, low-fat vinaigrettes, culinary sauces, intended for the seasoning or the accompanying of dishes, containing the lipidic composition according to any one of claims 1 to 33.

37. Food composition, particularly food supplements such as the capsules or gelcaps, containing the lipidic composition according to any one of claims 1 to 33.

38. Food composition, particularly a composition containing milk and/or milk derivatives, particularly creams, fermented milks, yoghourts, sauces, cheeses and milky desserts, being able to incorporate vegetable oil, containing the lipidic composition according to any one of claims 1 to 33.

## Patentansprüche

1. Lipidzusammensetzung, die mehr als 99 % und bevorzugt etwa 99,9 % Lipide pflanzlichen Ursprungs enthält, umfassend:
- etwa 45 bis etwa 67 Gew.-%, bevorzugt etwa 47 bis etwa 63 Gew.-% Rapsöl,
- mindestens 18 und insbesondere etwa 18 bis etwa 28 Gew.-% und bevorzugt etwa 20 bis etwa 27 Gew.-% Olivenöl, das gegen die organoleptische Beeinträchtigung des Rapsöls im Zeitverlauf schützt, und
- etwa 11 bis etwa 24 Gew.-% und bevorzugt etwa 16 bis etwa 21 Ges.-% mindestens eines Pflanzenöls, das einerseits etwa 50 bis etwa 80 Gew.-% Linolensäure und andererseits etwa 20 bis etwa 200 mg/100 g α-Tocopherol enthält, so dass die Lipidzusammensetzung etwa 20 bis etwa 35 mg/100 g und bevorzugt etwa 21 bis etwa 29 mg/100 g Gewichtsanteile α-Tocopherol umfasst,
wobei die Lipidzusammensetzung die folgenden Eigenschaften aufweist:
* sie ist bei Umgebungstemperatur in natürlichem Innenraumlicht während 12-wöchigen Kurzzeittests ohne organoleptische Beeinträchtigung haltbar,
* ihr Mindesthaltbarkeitsdatum (MHD) beträgt bei Umgebungstemperatur, lichtgeschützt, mindestens 22 Monate,
* sie weist ein Gewichtsverhältnis Ölsäure/Linolsäure (OL/LA) (ω9/ω6) auf, das von 1,9 bis 2,8 variiert,
* sie weist ein Gewichtsverhältnis Linolsäure/alpha-Linolensäure (LA/ALA) (ω6/ω3) auf, das von 3 bis 6 und bevorzugt von 3,8 bis 5,5 variiert,
* sie umfasst keine mehrfach ungesättigten ω6-Fettsäuren, die einen Ungesättigtheitsgrad von 3 aufweisen,
* sie umfasst keine mehrfach ungesättigten ω3- und ω6-Fettsäuren, die einen Ungesättigtheitsgrad größer als 3 aufweisen,
* sie ist frei von Öl, das als potenziell allergen gilt, und
* sie ist frei von Öl, das aus Meeresorganismen stammt.

2. Lipidzusammensetzung nach Anspruch 1, **dadurch gekennzeichnet, dass** die ω3-Fettsäuren der Lipidzusammensetzung einen maximalen Ungesättigtheitsgrad von 3 aufweisen, und **dadurch**, dass die ω6-Fettsäuren der Lipidzusammensetzung einen maximalen Ungesättigtheilsgrad von 2 aufweisen.

3. Lipidzusammensetzung nach Anspruch 1 oder 2, **dadurch gekennzeichnet, dass** sie frei von langkettigen mehrfach ungesättigten Fettsäuren ist, und zwar Fettsäuren, die einen Ungesättigtheitsgrad haben, der exakt größer als 3 ist, und insbesondere **dadurch**, dass sie innerhalb der ω3-Familie frei von Eicosapentaensäure (EPA), Docosapentaensäure (DPA) und Docosahexaensäure (DHA) ist (C22:6 n-3).

4. Lipidzusammensetzung nach einem der Ansprüche 1 bis 3, **dadurch gekennzeichnet, dass** sie umfasst:
- etwa 9 bis etwa 11 Gew.-% und bevorzugt etwa 10 Gew.-% gesättigte Fettsäuren,
- etwa 54 bis etwa 65 Gew.-%, bevorzugt etwa 55 bis etwa 60 Gew.-% und noch stärker bevorzugt etwa 57 bis etwa 60 Gew.-% einfach ungesättigte Fettsäuren, und
- etwa 25 bis etwa 35 Ges.-% und bevorzugt etwa 29 bis etwa 33 Gew.-% mehrfach ungesättigte Fettsäuren,

5. Lipidzusammensetzung nach irgendeinem der Ansprüche 1 bis 4, **dadurch gekennzeichnet, dass** sie etwa 53 bis etwa 61 Gew.-% und bevorzugt etwa 55 bis etwa 59 Gew.-% einfach ungesättigte Ölsäure (ω9) umfasst.

6. Lipidzusammensetzung nach irgendeinem der Ansprüche 1 bis 5, **dadurch gekennzeichnet, dass** sie etwa 21 bis etwa 29 Gew.-% und bevorzugt etwa 23 bis etwa 28 Gew.-% mehrfach ungesättigte Linolsäure (ω6) umfasst.

7. Lipidzusammensetzung nach irgendeinem der Ansprüche 1 bis 6, **dadurch gekennzeichnet, dass** sie etwa 4,5 bis etwa 6,5 Ges.-% und bevorzugt etwa 5,0 bis etwa 5,5 Ges.-% mehrfach ungesättigte alpha-Linolensäure (ω3) umfasst.

8. Lipidzusammensetzung nach irgendeinem der Ansprüche 1 bis 7, **dadurch gekennzeichnet, dass** das Gewichtsverhältnis zwischen den einfach ungesättigten Fettsäuren und den mehrfach ungesättigten Fettsäuren von etwa 1,5 bis etwa 2,7 und bevorzugt von etwa 1,6 bis etwa 2,3 variiert.

9. Lipidzusammensetaung nach irgendeinem der Ansprüche 1 bis 8, **dadurch gekennzeichnet, dass** sie ein Gewichtsverhältnis zwischen den ω6-Fettsäuren und zwischen den ω3-fettsäuren von etwa 5 aufweist.

10. Lipidzusammensetzung nach irgendeinem der Ansprüche 1 bis 9, **dadurch gekennzeichnet, dass** sie natives Olivenöl umfasst und **dadurch**, dass die anderen Öle raffinierte Öle sind.

11. Lipidzusammensetzung nach irgendeinem der Ansprüche 1 bis 10, **dadurch gekennzeichnet, dass** sie etwa 20 mg/100 g bis etwa 35 mg/100 g Gewichtsanteile α-Tocophezol umfasst und bevorzugt **dadurch**, dass sie etwa 21 mg/100 g bis etwa 29 mg/100 g Gewichtsanteil α-Tocopherol umfasst.

12. Lipidzusammensetzung nach irgendeinem der Ansprüche 1 bis 11, **dadurch gekennzeichnet, dass** das Gewichtsverhältnis zwischen den dem α-Tocopherol und dem γ-Tocopherol von etwa 1,0 bis etwa 2,0 und bevorzugt von etwa 1,1 bis etwa 1,8 variiert.

13. Lipidzusammensetzung nach Anspruch 11 oder 12, **dadurch gekennzeichnet, dass** das α-Tocopiterol natürliches α-Tocopherol ist.

14. Lipidzusammensetzung nach irgendeinem der Ansprüche 1 bis 11, **dadurch gekennzeichnet, dass** sie einen α-Tocopherol- und/oder α-Tocopherolacetatzusatz enthält, der es ermöglicht, einen Endgehalt an α-Tocopherol von maximal etwa 100 mg/100 g in der Lipidzusammensetzung zu erhalten.

15. Lipidzusammensetzung nach irgendeinem der Ansprüche 1 bis 14, **dadurch gekennzeichnet, dass** sie frei von Öl ist, das als potenziell allergen gilt, wie Erdnussöl, Walnussöl, Haselnussöl oder Sesamöl.

16. Lipidzusammensetzung nach irgendeinem der Ansprüche 1 bis 15, **dadurch gekennzeichnet, dass** sie frei von Ölen von Meeresorganismen, insbesondere von Fischen, ist.

17. Lipidzusammensetzung nach irgendeinem der Ansprüche 1 bis 16, **dadurch gekennzeichnet, dass** das Olivenöl, das gegen die organoleptische Veränderung des Rapsöls im Zeitverlauf schützt, "natives Olivenöl extra" oder "natives" Olivenöl oder Olivenöl ist, das "aus raffinierten Olivenölen und nativen Olivenölen besteht".

18. Lipidzusammensetzung nach irgendeinem der Ansprüche 1 bis 17, **dadurch gekennzeichnet, dass** das Pflanzenöl, das einerseits etwa 50 bis etwa 80 Gew.-% Linolensäure (ω6) und andererseits etwa 20 bis etwa 200 mg/100 g α-Tocopherol enthält, insbesondere ausgewählt ist aus Sonnenblumenöl, Maiskeimöl, Safloröl, Traubenkernöl, Weizenkeimöl, Baumwollsamenöl, Apfelkernöl.

19. Lipidzusammensetzung nach irgendeinem der Ansprüche 1 bis 18, **dadurch gekennzeichnet, dass** sie außerdem etwa 4 bis etwa 24 Gew.-%, bevorzugt etwa 5 bis etwa 19 Gew.-% Sonnenblumenöl umfasst.

20. Lipidzusammensetzung nach irgendeinem der Ansprüche 1 bis 19, **dadurch gekennzeichnet, dass** sie außerdem etwa 1 Gew.-% bis etwa 23 Ges.-%, bevorzugt etwa 5 bis etwa 13 Gew.-% Traubenkernöl umfasst.

21. Lipidzusammensetzung nach Anspruch 20, **dadurch gekennzeichnet, dass** sie außerdem etwa 4 bis etwa 10 Gew.-%, bevorzugt etwa 5 bis etwa 8 Gew.-% Sojaöl umfasst, wobei das Sojaöl als teilweiser Ersatz des Gewichtsanteil verwendet wird, der im Wesentlichen dem Rapsöl entspricht.

22. Lipidzusammensetzung nach Anspruch 20, **dadurch gekennzeichnet, dass** sie außerdem etwa 0,8 bis etwa 3,5 Gew.-%, bevorzugt etwa 1 bis etwa 3 Gew.-% Leinöl umfasst, wobei das Leinöl als teilweiser Ersatz des Rapsöls in einem Ersatzverhältnis von etwa 1/7 bis etwa 1/10 verwendet wird.

23. Lipidzusammensetzung nach Anspruch 20, **dadurch gekennzeichnet, dass** sie außerdem etwa 1 bis etwa 7 Gew.-%, bevorzugt etwa 5 Gew.-% bis etwa 6 Gew.-% Leindotteröl umfasst, wobei das Leindotteröl als Ersatz des Rapsöls in einem Ersatzverhältnis von etwa 1/4 bis etwa 1/6 verwendet wird.

24. Lipidzusammensetzung nach Anspruch 20, **dadurch gekennzeichnet, dass** sie außerdem etwa 0,7 bis etwa 1 Gew.-%, bevorzugt etwa 0,8 Gew.-% Perillaöl umfasst, wobei das Perillaöl als Ersatz des Rapsöls in einem Ersatzverhältnis von etwa 1/6 bis etwa 1/9 verwendet wird.

25. Lipidzusammensetzung nach Anspruch 20, **dadurch gekennzeichnet, dass** sie außerdem etwa 8 bis etwa 14 Gew.-%, bevorzugt etwa 9 bis etwa 12 Gew.-% Maiskeimöl umfasst, wobei das Maiskeimöl als Ersatz des Sonnenblumenöls in einem Ersatzverhältnis von etwa 1/1 bis etwa 1,3/1 verwendet wird.

26. Lipidzusammensetzung nach Anspruch 20, **dadurch gekennzeichnet, dass** sie außerdem etwa 8 bis etwa 14 Gew.-%, bevorzugt etwa 9 bis etwa 12 Gew.-% Maiskeimöl umfasst, wobei das Maiskeimöl als Ersatz des Traubenkernöls in einem Ersatzverhältnis von etwa 1,2/1 bis etwa 1,3/1 verwendet wird.

27. Lipidzusaimnensetzung nach Anspruch 20, **dadurch gekennzeichnet, dass** sie außerdem etwa 2 bis etwa 13 Gew.-%, bevorzugt etwa 4 Gew.-% bis etwa 11 Gew.-% Safloröl umfasst, wobei das Safloröl als Ersatz des Traubenkernöls in einem Ersatzverhältnis von etwa 0,8/1 bis etwa 1/1 verwendet wird.

28. Lipidzusammensetzung nach irgendeinem der Ansprüche 1 bis 27, **dadurch gekennzeichnet, dass** sie umfasst:
- etwa 0,03 bis etwa 0,05 % Fettsäure C14:0,
- etwa 5,90 bis etwa 6,60 % Fettsäure C16:0,
- etwa 0,30 bis etwa 0,40 % Fettsäure C16:1,
- etwa 0,05 bis etwa 0,07 Fettsäure C17:0,
- etwa 0,05 bis etwa 0,09 % Fettsäure C17:1,
- etwa 2,30 bis etwa 2,8 % Fettsäure C18:0,
- etwa 53,0 bis etwa 61,0 % Fettsäure C18:1,
- etwa 21,0 bis etwa 29,0 % Fettsäure C18:2 ω6,
- etwa 4,5 bis etwa 6,5 % Fettsäure C18:3 ω3,
- etwa 0,40 bis etwa 0,60 % Fettsäure C20:0,
- etwa 0,80 bis etwa 1,00 % Fettsäure C20:1,
- etwa 0,04 bis etwa 0,06 Fettsäure C20:2,
- etwa 0,20 bis etwa 0,40 % Fettsäure C22:0,
- etwa 0,10 bis etwa 0,30 % Fettsäure C22:1,
- etwa 0,07 bis etwa 0,15 % Fettsäure C24:0, und
- etwa 0,07 bis etwa 0,15 % Fettsäure C24:1.

29. Lipidzusammensetzung nach irgendeinem der Ansprüche 1 bis 28, **dadurch gekennzeichnet, dass** sie umfasst:
- etwa 0,04 % Fettsäure C14:0,
- etwa 6,29 % Fettsäure C16:0,
- etwa 0,34 % Fettsäure C16:1,
- etwa 0,06 % Fettsäure C17:0,
- etwa 0,08 % Fettsäure C17:7,
- etwa 2,61 % Fettsäure C18:0,
- etwa 57,20 % Fettsäure C18:1,
- etwa 25,44 % Fettsäure C18:2 ω6,
- etwa 5,40 % Fettsäure C18:3 ω3,
- etwa 0,48 % Fettsäure C20:0,
- etwa 0,87 % Fettsäure C20:1,
- etwa 0,05 % Fettsäure C20:2,
- etwa 0,30 % Fettsäure C22:0,
- etwa 0,15 % Fettsäure C22:1,
- etwa 0,08 % Fettsäure C24:0, und
- etwa 0,09 % Fettsäure C24:1.

30. Lipidzusammensetzung nach irgendeinem der Ansprüche 1 bis 29, **dadurch gekennzeichnet, dass** sie umfasst:
- etwa 22 bis etwa 26 % Olivenöl, insbesondere natives Olivenöl oder natives Olivenöl extra,
- etwa 53 bis etwa 63 % Rapsöl, insbesondere raffiniertes Rapsöl,
- etwa 5 bis etwa 19 Sonnenblumenöl, insbesondere raffiniertes Sonnenblumenöl, und
- etwa 5 bis etwa 13 % Traubenkernöl, insbesondere raffiniertes Traubenkernöl.

31. Lipidzusammensetzung nach irgendeinem der Ansprüche 1 bis 30, **dadurch gekennzeichnet, dass** sie umfaßt:
- etwa 24 % Olivenöl, insbesondere natives Olivenöl oder natives Olivenöl extra,
- etwa 58 % Rapsöl, insbesondere raffiniertes Rapsöl,
- etwa 7 % Sonnenblumenöl, insbesondere raffiniertes Sonnenblumenöl, und
- etwa 11 % Traubenkernöl, insbesondere raffinierte Traubenkernöl.

32. Lipidzusammensetzung nach irgendeinem der Ansprüche 1 bis 31, **dadurch** gekenntzeichnet, dass sie frei von GVO-Öl ist, und **dadurch**, dass sie umfasst:
- etwa 24 % Olivenöl, insbesondere natives Olivenöl oder natives Olivenöl extra,
- etwa 58 % raffiniertes Nicht-GVO-Rapsöl französischen Ursprungs, bei dem die Identität der Sorte aufrecht erhalten wird,
- etwa 7 % Sonnenblumenöl, insbesondere raffiniertes Sonnenblumenöl, und
- etwa 11 % Traubenkernöl, insbesondere raffiniertes Traubenkernöl.

33. Lipidzusammensetzung nach irgendeinem der Ansprüche 1 bis 32, **dadurch gekennzeichnet, dass** sie außerdem Vitamin D, insbesondere Vitamin D3, in einem Verhältnis von etwa 10 bis etwa 150 µg Vitamin D je kg Lipidzusammensetzung, insbesondere einem Verhältnis von 50 µg Vitamin D je kg Lipidzusammensetzung umfasst.

34. Lipidzusammensetzung nach irgendeinem der Ansprüche 1 bis 33, insbesondere Pflanzenöl, das der Verwendung als Würzöl, Bratöl, Frittieröl oder Mehrzwecköl dient.

35. Nahrungsmittelzusammensetzung, insbesondere aromatische und/oder aromatisierte Ölzubereitung, die die Lipidzusammensetzung nach irgendeinem der Ansprüche 1 bis 33 enthält.

36. Nahrungsmittelzusammensetzung, insbesondere emulgierte oder nicht emulgierte Gewürzzusammensetzung auf der Basis von Pflanzenöl, insbesondere Mayonnaisen; kalorienreduzierte Mayonnaisen, Soßen für Salate und Rohkost, Vinaigretten, kalorienreduzierte Vinaigretten, Soßen zum Kochen, die dem Würzen oder als Beilage von Gerichten dienen, die die Lipidzusammensetzung nach irgendeinem der Ansprüche 1 bis 33 enthalten.

37. Nahrungsmittelzusammensetzung, insbesondere Nahrungsergänzungsmittel, wie insbesondere etwa Kapseln oder Gelatinekapseln, die die Lipidzusammensetzung nach irgendeinem der Ansprüche 1 bis 33 enthalten.

38. Nahrungsmittelzusammensetzung, insbesondere auf der Basis von Milch und/oder Milchderivaten, insbesondere Cremen, fermentierte Milchprodukte, Joghurts, Soßen, Käse und Milchdesserts, denen Pflanzenöl zugesetzt werden kann, die die Lipidzusammensetzung nach irgendeinem der Ansprüche 1 bis 33 enthält.
